# FASCICULE DE BREVET EUROPEEN

(11) **EP 3 132 523 B1**
(45) Date de publication et mention de la délivrance du brevet: **17.03.2021**
(21) Numéro de dépôt: 15723254.7
(22) Date de dépôt: 09.04.2015
(51) Int. Cl.: H02K 3/34, H02K 15/085, H02K 15/10, H02K 1/16

(54) **STATOR EXTÉRIEUR DE MACHINE ELECTRIQUE À FACTEUR DE REMPLISSAGE D'ENCOCHES OPTIMISÉ**
AUSSENSTATOR EINER ELEKTRISCHEN MASCHINE MIT OPTIMIERTEM NUTFÜLLFAKTOR
OUTER STATOR OF AN ELECTRIC MACHINE WITH OPTIMISED SLOT FILLING FACTOR

(30) Priorité: 17.04.2014 FR 1453432
(43) Date de publication de la demande: 22.02.2017
(73) Titulaire: Valeo Equipements Electriques Moteur, 94046 Créteil Cedex (FR)
(72) Inventeur: DARRAS, Ludovic, 62140 Huby Saint Leu (FR); RAMET, Vincent, 62630 Etaples-Sur-Mer (FR); KADIRI, Mostafa, 62630 Etaples-Sur-Mer (FR); EVEN, Denis, 94046 Creteil Cedex (FR); DUQUESNE, Jean, 62630 Etaples-Sur-Mer (FR); SAPOTILLE, Larry, 94046 Creteil Cedex (FR)
(86) Numéro de dépôt international: PCT/FR2015/050935
(87) Numéro de publication internationale: WO 2015/158988

(56) Documents cités:
- DE-A1-102005 028 743
- JP-A- 2000 175 392

## Description

La présente invention porte sur un stator de machine électrique à remplissage d'encoches optimisé, ainsi que le procédé de réalisation dudit stator correspondant.

L'invention trouve une application particulièrement avantageuse pour un stator d'une machine électrique tournante telle que par exemple un alternateur, un alterno-démarreur, ou un moteur électrique.

De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur comme décrit dans le document EP0803962 ou d'un moteur électrique comme décrit dans le document EP0831580. La machine électrique comporte un boîtier portant le stator. Ce boîtier est configuré pour porter à rotation l'arbre du rotor par exemple par l'intermédiaire de roulements.

Le rotor comporte un corps formé par un empilage de feuilles de tôles maintenues sous forme de paquet au moyen d'un système de fixation adapté, tel que des rivets traversant axialement le rotor de part en part. Le rotor comporte des pôles formés par exemple par des aimants permanents logés dans des cavités ménagées dans la masse magnétique du rotor, comme cela est décrit par exemple dans le document EP0803962. Alternativement, dans une architecture dite à pôles "saillants", les pôles sont formés par des bobines enroulées autour de bras du rotor.

Le stator comporte un corps constitué par un empilage de tôles minces ainsi qu'un bobinage des phases reçu dans des encoches du stator ouvertes vers l'intérieur. Les phases sont généralement au nombre de trois ou six. Dans les stators d'alternateurs de ce genre, les types de bobinages les plus couramment utilisés sont, d'une part, les bobinages dits "concentriques" constitués par des bobines fermées sur elles-mêmes qui sont enroulées autour des dents du stator, et d'autre part, les bobinages du type dit "ondulé", qui sont décrits par exemple dans le document FR2483702.

Le bobinage ondulé comporte une pluralité d'enroulements de phase, du type dans lequel chaque enroulement comporte au moins un conducteur en spirale dont chaque spire forme des ondulations parcourant les encoches du corps. Ces conducteurs présentent des structures de boucle situées alternativement de chaque côté du rotor ou du stator reliant entre eux des structures de segment situés à l'intérieur des encoches du stator. Un ensemble de structures de boucle dépassant d'un côté du stator constitue un chignon du bobinage.

Afin d'améliorer les performances de la machine électrique, il est préférable de remplir au maximum les encoches du stator tout en facilitant la formation des chignons de bobinage. Pour cela, pour des stators composant des alternateurs notamment destinés aux applications automobiles, il a été proposé dans le document US6459187 de réaliser des bobinages dit de type "avant arrière" comportant des enroulements de phase formés par des conducteur ayant des structures de segment positionnées alternativement dans une couche radiale interne et une couche radiale externe de conducteur.

L'invention vise à maximiser le remplissage des encoches par les conducteurs, en optimisant la taille du conducteur pouvant être inséré dans chaque encoche par rapport à la largeur de l'encoche.

A cet effet, l'invention propose un stator de machine électrique tournante comportant un corps muni d'une culasse et de dents délimitant deux à deux des encoches ainsi qu'un bobinage comportant des conducteurs ayant des structures de segment insérées à l'intérieur des encoches, caractérisé en ce qu'un rapport entre une largeur d'encoche recouverte d'un isolant d'encoche et une largeur de structure de segment recouverte d'émail est compris entre 0,9 et 2.

Par exemple, l'épaisseur d'email des conducteurs est 0.12 mm et l'épaisseur de l'isolant est 0.13 mm.

Selon une réalisation, chaque bord d'encoche recouvert d'un isolant présentant un jeu d'insertion avec une extrémité d'une section d'une structure de segment donnée, la largeur d'encoche est égale à la somme de la largeur de structure de segment et du double du jeu d'insertion, ledit double du jeu d'insertion étant inférieur à un jeu de 0.3mm. Par exemple ledit double du jeu est supérieur à un jeu négatif de -0.2mm et inférieur à un jeu positif de +0.3mm.

Toutefois, la largeur d'encoche et la largeur de la structure de segment se mesurent suivant une direction ortho radiale. La largeur d'encoche ne comprend pas les pieds de dents, le cas échéant. Dans le cas où l'encoche présente des pieds de dents, on mesure la largeur d'encoche juste en dessous des pieds de dents.

Selon une variation, qui ne forme pas part de l'invention, les encoches sont à bords parallèles.

Selon la réalisation, les encoches sont trapézoïdales c'est-à-dire présentent chacune une section de forme trapèze selon un plan perpendiculaire à l'axe de la machine. Les encoches sont chacune pourvues de bords dont les directions convergent vers l'axe du stator.

En d'autres termes, chacune des encoches présentent deux bords qui définissent sa forme, ces deux bords ne sont pas parallèles et présentent chacun une direction. On définit pour le stator un centre axial passant qui est traversé par l'axe du stator. Dans ce cas, les directions de chacun de ces deux bords définissant la forme de l'encoche sont telles que lorsque l'on se rapproche du centre axial tel que défini, la distance entre les deux droites se superposant sur les deux bords diminue, de sorte que les deux bords convergent. Par exemple, la direction de chacun de ces deux bords est sensiblement radiale.

Selon la réalisation comprenant des encoches trapézoïdales, pour chaque encoche est défini :
- un jeu d'entrée d'encoche égal au jeu d'insertion ;
- un jeu de fond d'encoche, le double du jeu de fond d'encoche étant inférieur à +0.5mm.

A cause des encoches trapézoïdales, la largeur de chaque encoche varie lorsque l'on se déplace radialement suivant les bords de l'encoche. On a donc une variation du jeu entre la largeur de l'encoche et une extrémité d'une section d'une structure de segment donnée, selon notamment si l'on se place au fond de l'encoche ou à l'entrée de l'encoche.

On peut définir premièrement un jeu d'entrée d'encoche qui correspond à la différence entre la largeur de l'encoche au niveau de son entrée et la largeur de structure de segment recouverte de son email.

On peut définir deuxièmement un jeu de fond d'encoche qui correspond à la différence entre la largeur de l'encoche au niveau de son fond et la largeur de structure de segment recouverte de son email.

Toutefois, comme déjà mentionné ci-dessus la largeur d'encoche et la largeur de la structure de segment se mesurent suivant une direction ortho radiale. La largeur d'encoche ne comprend pas les pieds de dents, le cas échéant. Dans le cas où l'encoche présente des pieds de dents, on mesure la largeur d'encoche juste en dessous des pieds de dents.

Cette différence entre le jeu au fond de l'encoche et entrée d'encoche du fait de l'encoche trapézoïdale permet lors de l'insertion radiale, une meilleure tenue de l'isolant d'encoche. En effet, au début de l'insertion, la structure de segment voit le jeu d'entrée d'encoche et tire un peu sur l'isolant d'encoche, puis lorsque la structure de segment arrive au milieu de l'encoche elle voit un jeu avec les bords de l'encoche qui augmente, elle ne tire donc plus sur l'isolant. C'est avantageux, car au début de l'insertion on se situe dans la plage d'élasticité de l'isolant tandis qu'en milieu d'insertion, le fait de tirer risque de provoquer la rupture de l'isolant.

Selon une réalisation, ledit stator est dépourvu de pied de dents.

Selon une réalisation, ledit stator comporte des coins situés au niveau d'extrémités libres des dents ayant une forme arrondie suivant un rayon, dit rayon d'entrée.

Selon une réalisation, le rayon d'entrée est compris entre 0.15mm et la moitié d'une largeur d'une dent.

Selon une variation possible, ledit stator comporte en outre des moyens d'indexage externes ménagés sur une périphérie externe de la culasse.

Selon une réalisation, le bobinage comporte une pluralité d'enroulements de phase.

Selon une réalisation, des structures de segment de deux conducteurs d'un même enroulement de phase sont positionnées alternativement dans une couche radiale interne et une couche externe suivant une circonférence du stator.

Selon une réalisation, chaque enroulement de phase est constitué d'un fil unique.

Selon une variation possible, pour deux encoches adjacentes d'une série d'encoches associée à un enroulement de phase, le bobinage présente deux structures de boucle situées de part et d'autre du stator reliant des structures de segment d'une desdites encoches adjacentes à celles de l'autre.

Selon une variation possible, lesdites deux structures de boucle relient respectivement une structure de segment appartenant à une couche interne à une structure de segment appartenant à une couche externe et une structure de segment appartenant à une couche externe à une structure de segment appartenant à une couche interne.

Selon une réalisation, les conducteurs ont une section carrée ou rectangulaire.

Selon une réalisation, les structures de segment des enroulements de phase insérées dans les encoches du stator sont matricées.

Selon une réalisation, ledit bobinage comporte quatre, six, ou huit, couches de conducteurs radialement superposées dans les encoches du stator.

Selon une réalisation, ledit bobinage comporte huit couches de conducteurs radialement superposées dans les encoches du stator.

L'invention a également pour objet une machine électrique tournante notamment un alternateur comprenant un stator tel que précédemment décrit.

Le procédé de réalisation directement déduit du stator bobiné comportant un corps muni d'une culasse et de dents arrangées sur une périphérie interne de ladite culasse, lesdites dents délimitant deux à deux des encoches et ledit procédé comporte un étape d'insertion de structures de segment de conducteur appartenant à un bobinage dans les encoches du stator telle qu'un rapport entre une largeur d'encoche recouverte d'un isolant d'encoche et une largeur de structure de segment recouverte d'émail est compris entre 0,9 et 2.

Selon une mise en œuvre, chaque bord d'encoche présentant un jeu d'insertion avec une extrémité d'une section d'une structure de segment, la largeur d'encoche est égale à la somme de la largeur de structure de segment et du double du jeu d'insertion, ledit double du jeu étant inférieur à 0.3mm. Par exemple, ledit double du jeu étant supérieur à un jeu négatif de - 0.2mm et inférieur à un jeu positif de 0.3mm.

Selon une variation, qui ne forme pas part de l'invention, lesdites encoches sont à bords parallèles.

Selon la réalisation, les encoches sont trapézoïdales et sont chacune pourvues de bords dont les directions convergent vers l'axe du stator.

Selon la réalisation aux encoches trapézoïdales, pour chaque encoche est défini :
- un jeu d'entrée d'encoche défini avec le bord de l'extrémité des dents, égal au jeu d'insertion ;
- un jeu de fond d'encoche, le double du jeu de fond d'encoche étant inférieur à +0.5mm.

Selon une mise en œuvre, ledit procédé comporte une étape de réalisation d'une forme arrondie suivant un rayon, dit rayon d'entrée, dans des coins situés au niveau des extrémités libres des dents.

Selon une mise en œuvre, le rayon d'entrée est compris entre 0.15mm et la moitié d'une largeur d'une dent.

Selon une mise en œuvre, ledit procédé comporte une étape de réalisation d'un bobinage comportant une pluralité d'enroulements de phase.

Selon une mise en œuvre, ledit bobinage est réalisé en sorte que des structures de segment de deux conducteurs d'un même enroulement de phase sont positionnées alternativement dans une couche radiale interne et une couche externe suivant une circonférence du stator.

Selon une mise en œuvre, ledit procédé comporte l'étape de réaliser chaque enroulement de phase à partir d'un fil unique.

Selon une mise en œuvre, ledit bobinage est réalisé en sorte que pour deux encoches adjacentes d'une série d'encoches associée à un enroulement de phase, le bobinage présente deux structures de boucle situées de part et d'autre du stator reliant des structures de segment d'une desdites encoches adjacentes à celles de l'autre.

Selon une mise en œuvre, lesdites deux structures de boucle relient respectivement une structure de segment appartenant à une couche interne à une structure de segment appartenant à une couche externe et une structure de segment appartenant à une couche externe à une structure de segment appartenant à une couche interne.

Selon une mise en œuvre, ledit procédé comporte l'étape de réaliser un bobinage comportant quatre, six ou huit couches de conducteurs radialement superposées dans les encoches du stator.

Selon une mise en œuvre, ledit procédé comporte l'étape de réaliser un bobinage comportant huit couches de conducteurs radialement superposées dans les encoches du stator.

Selon une mise en œuvre, les conducteurs utilisés présentent une section carrée ou rectangulaire.

Selon une mise en œuvre, ledit procédé comporte une étape de matriçage des structures de segment destinées à être insérées dans les encoches du stator.

Selon une mise en œuvre, ledit procédé comporte une étape d'indexage dudit corps de stator à l'aide de moyens d'indexage externes ménagés sur une périphérie externe de ladite culasse lors d'un positionnement dudit stator autour d'une broche portant ledit bobinage.

Selon une mise en œuvre, ledit procédé comporte une étape de mise en place d'un isolant d'encoche continu avant d'effectuer une étape d'insertion des structures de segment dans les encoches du stator.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue partielle en perspective de l'intérieur d'un stator dans lequel les conducteurs d'un enroulement de phase sont arrangés conformément à l'invention;
La figure 2 représente une vue de dessus du corps du stator de la figure 1 ;
La figure 3 est une vue de dessus détaillée de la forme des dents du stator de la figure 1 ;
La figure 4 montre une vue de dessus détaillé des moyens d'indexage externe du stator de la figure 1 ;
La figure 5 représente un développement linéaire de deux fils conducteurs formant un enroulement de phase montrant la position radiale relative des deux conducteurs l'un par rapport à l'autre sur la circonférence du stator;
La figure 6 est une vue en perspective du stator selon la présente invention muni de son bobinage;
La figure 7 représente une vue partielle en perspective des parties régulière et irrégulière du bobinage du stator selon la présente invention;
La figure 8 est une vue partielle en perspective de la partie irrégulière du bobinage du stator représentée seule;
La figure 9 est une représentation schématique en perspective d'une installation permettant la réalisation d'une nappe de bobinage selon la présente invention;
La figure 10 est une vue en perspective à plus grande échelle de l'installation représentée à la figure 9;
Les figures 11a et 11b sont respectivement des vues en perspective et de côté d'un premier type de stockeur utilisé avec l'installation des figures 9 et 10;
Les figures 12a et 12b sont respectivement des vues en perspective et de côté d'un deuxième type de stockeur utilisé avec l'installation des figures 9 et 10;
La figure 13 représente une vue en perspective d'un assemblage de stockeurs des figures 11 et 12;
La figure 14 est une vue en coupe détaillée longitudinale de l'assemblage de la figure 13 montrant une partie de la nappe de bobinage située entre les stockeurs;
Les figures 15a et 15b montrent respectivement des vues de dessus et de côté de la nappe de bobinage obtenue à l'aide de l'installation des figures 9 et 10;
Les figures 16a et 16b sont respectivement des vues en perspective et de côté d'un peigne modulaire utilisé pour le transfert de la nappe de bobinage vers une broche annulaire;
Les figures 17 à 20 représentent des vues en perspective des différents éléments composant le peigne modulaire des figures 16a et 16b;
La figure 21 est une vue en perspective de l'outil permettant de réaliser une première étape de conformage du chignon du bobinage sur le peigne de transfert;
La figure 22 est une représentation schématique de la broche annulaire autour de laquelle la nappe de bobinage est enroulée avant le transfert par expansion vers le corps du stator;
La figure 23 est une représentation schématique d'une installation pour la mise en oeuvre de la première étape de transfert des conducteurs de la nappe de bobinage vers la broche annulaire de la figure 22;
La figure 24a représente de façon schématique l'étape de mise en place d'un isolant d'encoche continu à l'intérieur des encoches du stator selon la présente invention;
La figure 24b représente de façon schématique l'étape de découpe de l'isolant d'encoche après insertion des conducteurs du bobinage dans les encoches du stator selon la présente invention;
Les figures 25a et 25b sont respectivement des vues en perspective et de dessus d'un stator selon la présente invention muni d'isolants d'encoche réalisés suivant un deuxième mode de réalisation;
Les figures 26a et 26b représentent l'étape de mise en place du stator autour de la broche annulaire afin de réaliser le transfert du bobinage par expansion de la broche annulaire vers le stator;
Les figures 27a et 27b sont des représentations schématiques des lames d'extraction montrées respectivement en position initiale et en approche de la position finale dans laquelle le bobinage a été transféré sur le corps du stator;
La figure 28 est une vue en perspective de l'outillage permettant de réaliser l'étape de conformage des chignons après la réalisation du stator bobiné;
Les figures 29a à 29c montrent des variantes de réalisation d'un poinçon permettant de réaliser l'étape de déformation de la couche interne de conducteurs pour leur maintien à l'intérieur du stator;
La figure 30 est une vue détaillée de dessus d'un stator selon la présente invention muni de pieds de dent pliables;
Les figures 31a et 31b montrent en vue de dessus deux modes de réalisation des dents pliables du stator selon la présente invention;
La figure 32 représente une étape de matriçage des structures de segment des conducteurs de la nappe de bobinage;
Les figures 33 et 34 montrent deux variantes de réalisation de l'outillage permettant de réaliser un matriçage de fil continu suivant le procédé de l'invention;
La figure 35a est une vue en perspective du fil obtenu à l'issue de l'étape de matriçage réalisée avec l'un des outils des figures 33 et 34;
La figure 35b est une vue en perspective d'une portion d'un fil matricé d'enroulement de phase muni de deux structures de segment et d'une structure de boucle;
La figure 36 est une vue de dessus de deux sous-nappes destinées à être imbriquées l'une avec l'autre pour obtenir la nappe de bobinage selon la présente invention;
La figure 37a est une vue en perspective d'un stator bobiné muni d'un interconnecteur réalisant un couplage en triangle des enroulements de phase de la machine électrique;
Les figures 37b et 37c montrent respectivement le schéma des connexions à l'intérieur de l'interconnecteur de la figure 37a entre les bornes de l'interconnecteur et les entrées et les sorties des enroulements de phase, ainsi que le schéma électrique correspondant;
La figure 38a est une vue en perspective d'un stator bobiné muni d'un interconnecteur réalisant un couplage en étoile des enroulements de phase de la machine électrique;
Les figures 38b et 38c montrent respectivement le schéma des connexions à l'intérieur de l'interconnecteur de la figure 38a entre les bornes de l'interconnecteur et les entrées et les sorties des enroulements de phase, ainsi que le schéma électrique correspondant;
La figure 39 montre une variante de réalisation de la connexion entre une patte d'un interconnecteur des figures 37a et 38a et une extrémité d'un enroulement de phase;
La figure 40 représente l'influence sur la hauteur des structures de boucle du phénomène de transfert de la broche annulaire vers le stator;
Les figures 41a-41b à 43a-43b sont des vues en perspective et de côté d'un stator bobiné selon la présente invention présentant différentes configurations de chignons de bobinage;
Les figures 44a et 44b montrent des vues de dessus d'un stator réalisé en deux parties comportant un noyau central (figure 44a) et une culasse rapportée destinée à être fixée autour du noyau central (figure 44b);
Les figures 45a et 45b représentent les étapes de mise en place par cambrage d'une culasse de forme plane autour du noyau central bobiné;
La figure 46 montre une étape de réalisation de la culasse autour du noyau central à partir d'une tôle plate enroulée autour du noyau central;
Les figures 47a à 47d montrent des variantes de réalisation de l'emboîtement entre les extrémités externes des dents du noyau central et la périphérie interne de la culasse rapportée;
Les figures 48a et 48b sont des vues partielles en perspective montrant les variantes possibles de réalisation des zones de raccord entre les dents du noyau central;
La figure 49 montre une vue en perspective d'un stator plat destiné à être cambré après mise en place de la nappe de bobinage;
La figure 50 montre une vue en perspective d'un stator cambré sans son bobinage muni d'un paquet de tôles dont les feuilles ont été thermocollées;
La figure 51 montre une ligne de deux demi-paquets de tôles plats ayant une feuille de rive plaquée contre une de leur face;
La figure 52 est une vue en perspective du stator obtenu après assemblage et cambrage des deux demi-paquets de la figure 51 sans le bobinage;
La figure 53 est une vue en perspective détaillé d'une des extrémités axiales des dents du stator comportant une feuille de rive;
La figure 54 est une vue en perspective d'un stator représenté sans son bobinage obtenu à partir d'un stator plat présentant au moins une soudure réalisée dans le fond d'une encoche;
La figure 55 est une vue en perspective détaillée d'une soudure réalisée dans le fond d'une encoche;
La figure 56 représente en vue de dessus le stator de la figure 54 faisant apparaître le positionnement angulaire relatif des soudures;
La figure 57 est une vue en perspective détaillée du stator muni d'une creusure dans chacune des encoches pour faciliter l'étape de cambrage;
La figure 58 montre une variante de réalisation du bobinage en utilisant deux fils en main par enroulement de phase.

Les éléments identiques, similaires, ou analogues conservent la même référence d'une figure à l'autre.

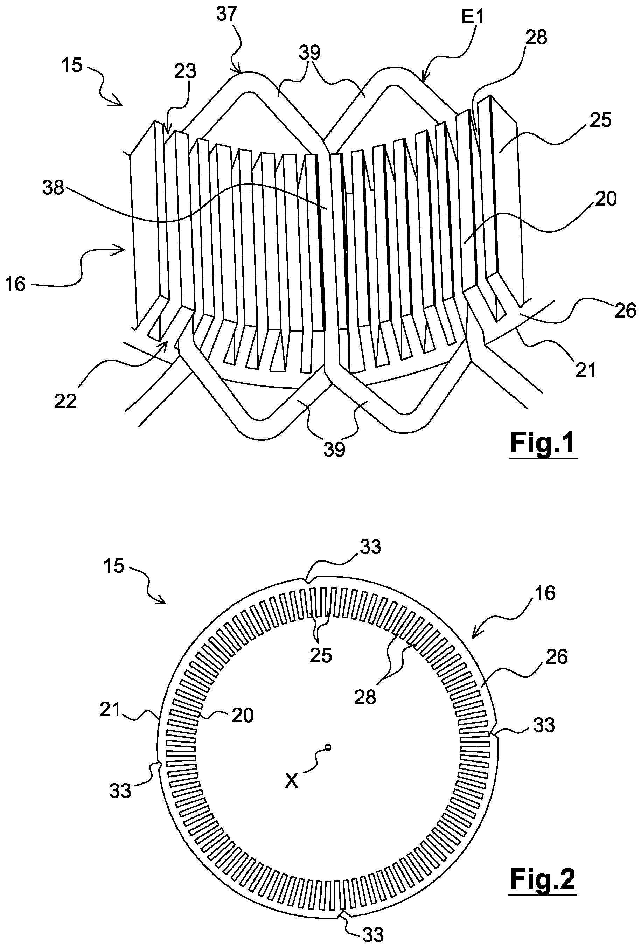

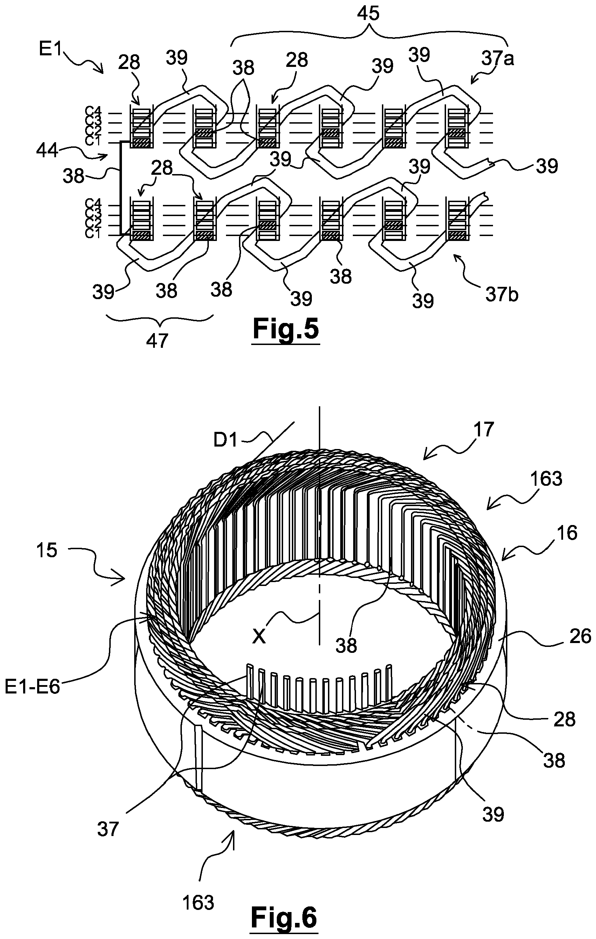

La figure 1 montre une vue partielle d'un stator 15 de machine électrique tournante qui comporte principalement un corps 16 dans lequel sont montés plusieurs enroulements de phase E1-E6 formant un bobinage 17 bien visible à la figure 6. Un seul enroulement E1 a été représenté sur la figure 1 pour faciliter la compréhension.

La machine tournante est par exemple un alternateur ou un alterno-démarreur. Cette machine est de préférence destinée à être mise en œuvre dans un véhicule automobile. On rappelle qu'un alterno-démarreur est une machine électrique tournante apte à travailler de manière réversible, d'une part, comme générateur électrique en fonction alternateur, et d'autre part comme moteur électrique, notamment pour démarrer le moteur thermique du véhicule automobile.

Comme cela est montré sur la figure 2, le corps 16 de stator 15 a une forme cylindrique annulaire d'axe X et consiste en un empilement axial de tôles planes. Le corps 16 de stator 15 est délimité radialement par une face cylindrique interne 20 et par une face cylindrique externe 21. Le corps 16 est par ailleurs délimité axialement par une face radiale d'extrémité axiale inférieure 22 et par une face radiale d'extrémité axiale supérieure 23.

Le corps 16 comporte des dents 25 réparties angulairement de manière régulière sur une circonférence interne d'une culasse 26. Ces dents 25 délimitent deux à deux des encoches 28. La culasse 26 correspond à la portion annulaire externe pleine du corps 16 qui s'étend entre le fond des encoches 28 et la périphérie externe du stator 15.

Les encoches 28 débouchent axialement dans les faces radiales d'extrémité axiales inférieure 22 et supérieure 23 du corps 16. Les encoches 28 sont ouvertes radialement dans la face cylindrique interne du corps 16. En variante, les encoches 28 sont ouvertes dans la face cylindrique externe du corps 16. Les encoches 28 du stator 15 peuvent, en variation non-revendiquée, être à bords parallèles, c'est-à-dire que les faces internes en vis-à-vis l'une de l'autre des encoches 28 sont parallèles l'une par rapport à l'autre. Les encoches 28 sont par exemple au nombre de 36, 48, 60, 72, 84, ou 96. Dans l'exemple de réalisation, le stator 15 comporte 96 encoches. Elles sont réparties angulairement de manière régulière autour de l'axe X du corps 16.

Pour former le bobinage 17 du stator 15, plusieurs enroulements de phase E1-E6 sont montés dans le corps 16. En l'occurrence, le stator 15 "hexaphasé" comporte six enroulements de phase E1-E6. L'invention est cependant applicable à des stators 15 comportant un nombre différent d'enroulements de phase, et notamment à des stators 15 "triphasés" comportant trois enroulements de phase E1-E3, ou des stators pentaphasés comportant cinq enroulements de phase E1-E5 ou heptaphasés comportant sept enroulements de phase E1-E7. Le corps 16 de stator 15 comporte alors par exemple trente-six ou quarante-huit encoches 28.

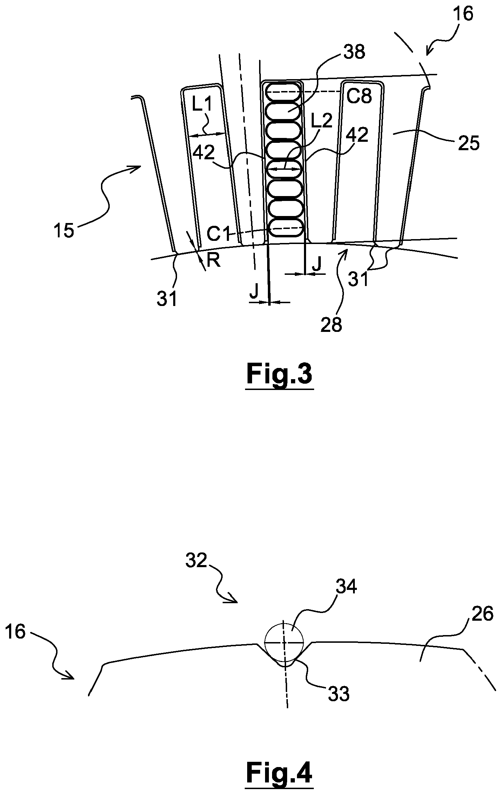

De préférence, comme cela est bien visible sur la figure 3, le stator 15 est dépourvu de pied de dents du côté des extrémités libres des dents 25. De plus, des coins 31 situés au niveau des extrémités libres des dents 25 ont de préférence une forme arrondie suivant un rayon R, dit rayon d'entrée. Ce rayon d'entrée R est compris entre 0.15mm et la moitié d'une largeur d'une dent 25. La réalisation de ce rayon permet de faciliter l'insertion des différentes couches de conducteurs 37 à l'intérieur des encoches 28 par l'extrémité des encoches 28 ouvertes du côté intérieur du stator 15. Pour obtenir la forme arrondie dans les coins 31, on réalise une étape de découpe des tôles du corps 16 suivant le rayon R et une étape de compactage du corps 16 du stator.

En outre, comme on peut le voir à la figure 4, des moyens d'indexage externe 32 ménagés sur une périphérie externe de la culasse 26 permettent un positionnement angulaire sous contrôle lors des différentes étapes de réalisation du stator 15 bobiné décrites plus en détails ci-après. Ces moyens d'indexage 32 sont en particulier utilisés au moment de la mise en place du stator 15 autour de la broche annulaire 105 avant le transfert du bobinage 17 vers les encoches 28 du stator 15. Ces moyens d'indexage 32 sont également utilisés lors de la mise en place d'un isolant d'encoche.

Ces moyens d'indexage externe 32 prennent la forme d'évidements 33 destinés à coopérer avec des piges 34 d'un outil externe. Les évidements 33 présentent en l'occurrence une section en forme en V, tandis que les piges 34 présentent une section ronde. En variante, les moyens d'indexage externe 32 prennent la forme de pions s'étendant en saillie sur la périphérie externe de la culasse 26 destinés à coopérer avec des évidements ménagés dans l'outil externe.

Chaque conducteur 37 appartenant à un enroulement de phase E1-E6 comporte une série de structures de segment 38 qui sont reçues dans une série d'encoches 28 associées. Chaque conducteur 37 comporte aussi des structures de boucle 39 qui relient entre elles les structures de segment 38 consécutives d'un enroulement donné E1-E6, et qui s'étendent alternativement en saillie par rapport à la face d'extrémité axiale supérieure 23 et en saillie par rapport à la face d'extrémité axiale inférieure 22. Un ensemble de structures de boucle 39 agencées au niveau d'une extrémité axiale du corps 16 de stator 15 constitue un chignon de bobinage 163.

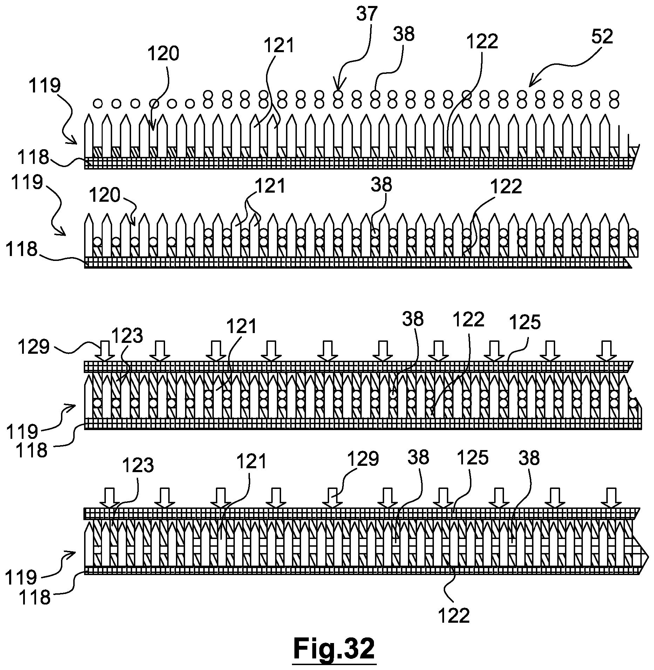

Afin d'optimiser le remplissage d'encoches 28, chaque conducteur 37 pourra présenter une section transversale rectangulaire ou carrée dont la largeur est sensiblement égale à la largeur d'une encoche 28. Suivant une réalisation, les conducteurs 37 présentent une section rectangulaire ou carrée sur toute leur longueur. Alternativement, les structures de segment 38 présentent une section carrée ou rectangulaire; tandis que des structures de boucle 39 reliant deux structures de segment 38 adjacentes présentent une section ronde. Pour obtenir une telle configuration, les conducteurs 37 pourront subir une étape de matriçage décrite ci-après en référence avec les figures 32 à 34. Les conducteurs 37 sont de préférence réalisés en cuivre recouvert d'émail. En variante, les conducteurs 37 pourront être réalisés en aluminium.

Comme montré à la figure 3, on définit un rapport entre une largeur d'encoche L1 définie entre les deux bords de l'encoche recouverts d'isolant d'encoche 145 et une largeur L2 de structure de segment 38 recouvert d'émail mesurée suivant une direction perpendiculaire aux faces internes de l'encoche 28 dans le cas d'une encoche rectangulaire. Dans tous les cas, encoche rectangulaire ou trapézoïdale les largeurs L1 et L2 sont mesurées suivant une direction ortho-radiale (rapport L1/L2).

Ce rapport est compris entre 0,9 et 2 afin de maximiser le remplissage des encoches 28 par les conducteurs 37, en optimisant la taille du conducteur 37 pouvant être inséré dans l'encoche par rapport à la largeur de l'encoche 28. De préférence, ce rapport vaut 1.1 ou 1.4.

Chaque encoche 28 étant recouverte de l'isolant 145, et chaque bord d'encoche recouvert de l'isolant présentant de préférence un jeu d'insertion J avec une extrémité en regard d'une section d'une structure de segment 38 donnée, la largeur d'encoche L1 est égale à la somme de la largeur de la structure de segment 38 et du double du jeu d'insertion J, ledit double du jeu d'insertion J étant inférieur à 0.3mm.

Par exemple, ledit double du jeu J d'insertion est supérieur à un jeu négatif de -0.2mm et inférieur à un jeu positif de +0.3mm. Le jeu d'insertion est défini par rapport à la largeur L2 d'une structure de segment avant son insertion dans l'encoche. Un jeu positif correspond à une largeur L1 supérieure à la largeur L2, c'est-à-dire à un espace non nul entre le bord d'une encoche recouvert de son isolant et la structure de segment tandis qu'un jeu négatif correspond à un espace nul entre le bord d'une encoche recouvert de son isolant. Plus précisément, dans le cas d'un jeu négatif la largeur L2 est supérieure à la largeur L1 de sorte que la structure de segment est montée serrée dans l'encoche. En d'autres termes, dans le cas d'un jeu positif, la somme entre le double du jeu positif et la largeur de la structure de segment est égale à la largeur de l'encoche recouverte de son isolant. De même, dans le cas d'un jeu négatif, la somme entre le double du jeu négatif et la largeur de structure de segment est égale à la largeur d'encoche recouverte de son isolant. Ainsi dans le cas d'un jeu négatif, la largeur de la structure de segment est supérieure à la largeur d'encoche recouverte de son isolant.

Toutefois, pour définir les jeux d'entrée, d'insertion ou de fond d'encoche, la largeur considérée de la structure de segment est celle avant son insertion dans l'encoche. Ainsi, un jeu négatif est possible notamment dans le cas où lors de l'insertion de la structure de segment sa largeur augmente.

Les encoches 28 d'une série d'encoches reçoivent les structures de segment 38 des conducteurs 37 constituant un enroulement de phase E1-E6. Chaque série d'encoches 28 est associée à un des six enroulements de phase. Deux encoches 28 consécutives d'une série d'encoches sont séparées par des encoches 28 adjacentes correspondant chacune à une autre série d'encoches 28 associée à l'un des cinq autres enroulements de phase. Ainsi, pour un stator 15 hexaphasé comme c'est le cas à la figure 1, cinq encoches 28 adjacentes sont laissées libres entre deux encoches 28 de chaque série. En d'autres termes, les conducteurs 37 d'un enroulement sont insérés dans une encoche sur six encoches 28 adjacentes. Ainsi, pour un stator 15 comportant K enroulements de phase, les structures de segment 38 sont reçues dans une encoche sur K encoches 28 adjacentes.

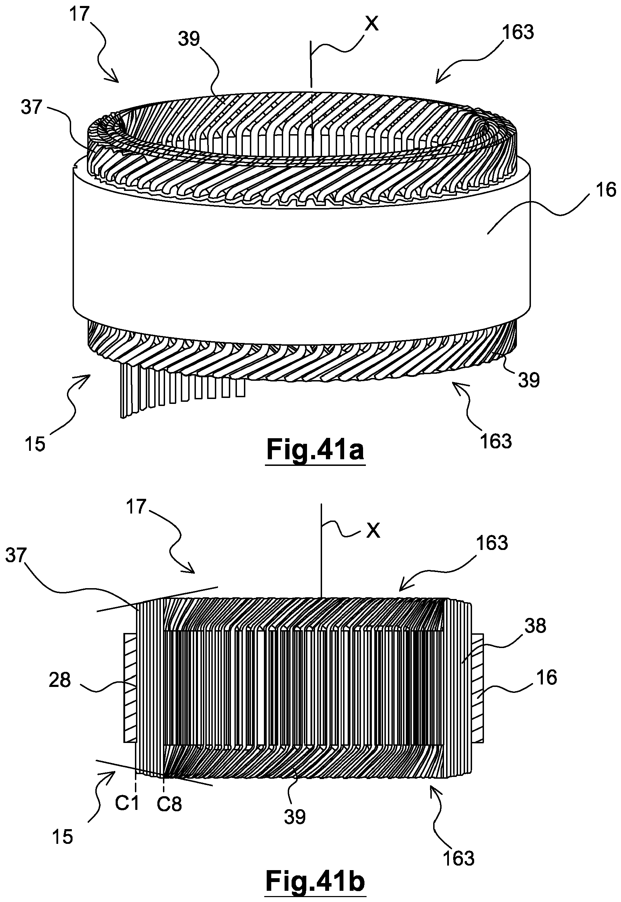

Les enroulements de phase E1-E6 définissent un empilement radial de couches concentriques C1-C8, comme cela est visible sur la figure 3 ou encore aux figures 41b, 42b ou 43b. Une couche dite "externe" est située du côté de la culasse 26 par rapport à une couche interne; tandis qu'une couche dite "interne" est située du côté de l'axe X du stator 15 par rapport à la couche externe. On a représenté ici un stator 15 comportant huit couches C1-C8 concentriques de conducteur 37. Toutefois, il est clair que le bobinage 17 pourra comporter moins ou plus de huit couches de conducteurs 37, et en particulier six ou quatre couches de conducteur 37 radialement superposées comme représenté à la figure 5.

Plus généralement, comme cela est expliqué plus en détails ci-après, le bobinage 17 est formé à partir d'une nappe de bobinage 52 de conducteurs entrelacés enroulée sur N/2 tours de stator 15, N étant le nombre de couches de conducteurs 37 souhaitées dans le stator 15 bobiné, N étant supérieur ou égal à deux. Le nombre N de couches de conducteurs 37 est de préférence égal à quatre, six, ou à huit.

Comme cela est visible à la figure 5 sur laquelle on a représenté une série d'encoches 28 associée à un enroulement de phase donné, ici l'enroulement de phase E1, les structures de segment 38 successives d'un même conducteur 37 sont positionnées alternativement dans une couche interne et une couche externe sur la majorité de la circonférence du stator 15.

Ainsi, pour une paire de conducteur 37a, 37b issu d'un même fil 44 replié comme cela est expliqué plus en détails ci-après et occupant les couches C1 et C2, chaque conducteur 37a, 37b est de forme globalement sinusoïdale et comporte consécutivement une structure de boucle 39 inférieure qui s'étend au-dessous de la face inférieure 22 du corps 16, une structure de segment 38 qui est reçu dans une encoche associée, une structure de boucle 39 supérieure qui s'étend au-dessus de la face supérieure 23 du corps 16, ou une structure de boucle 39 supérieure qui s'étend au-dessus de la face supérieure 23 du corps 16, une structure de segment 38 qui est reçu dans une encoche associée, une structure de boucle 39 inférieure qui s'étend au-dessous de la face inférieure 22 du corps 16.

Lorsque dans une encoche 28 de la série, la structure de segment 38 du conducteur 37a se trouve dans la couche C1, la structure de segment 38 du conducteur 37b se situe dans la couche C2. Par ailleurs, lorsque la structure de segment 38 du conducteur 37a se trouve dans la couche C2 de l'encoche 28 successive de la série, la structure de segment 38 du conducteur 37b se situe dans la couche C1. Dans tous les cas, les deux structures de segment 38 sont superposées radialement l'une sur l'autre dans chaque encoche 28.

Cette alternance dans les couches se retrouve également dans les couches C3 et C4 du bobinage 17. Dans chaque encoche 28 du stator 15, on a ainsi une seule colonne de structures de segment 38 empilées radialement les unes sur les autres.

Par ailleurs, pour deux encoches 28 adjacentes d'une série d'encoches associée à un enroulement de phase E1-E6, le bobinage 17 présente deux structures de boucle 39 situées de part et d'autre du stator 15 reliant des structures de segment 38 d'une des encoches 28 adjacentes à celles de l'autre.

Ainsi, la structure de boucle 39 d'un des conducteurs 37a qui relie les structures de segment 38 reçues dans les deux encoches 28 adjacentes mentionnées précédemment est agencée axialement au-dessus de la face supérieure du corps 16, alors que la structure boucle 39 de l'autre conducteur 37b qui relie les structures de segment 38 reçues dans les deux encoches 28 adjacentes mentionnées précédemment est agencé axialement au-dessous de la face inférieure du corps 16.

En outre, pour deux encoches 28 adjacentes d'une série associée à un enroulement de phase donnée E1-E6, la structure de boucle 39 du conducteur 37a relient une structure de segment 38 appartenant à une couche interne à une structure de segment 38 appartenant à une couche externe; tandis que la structure de boucle 39 de l'autre conducteur 37b relie une structure de segment 38 appartenant à une couche externe à une structure de segment 38 appartenant à une couche interne. La relation est inversée pour les deux encoches 28 adjacentes suivantes.

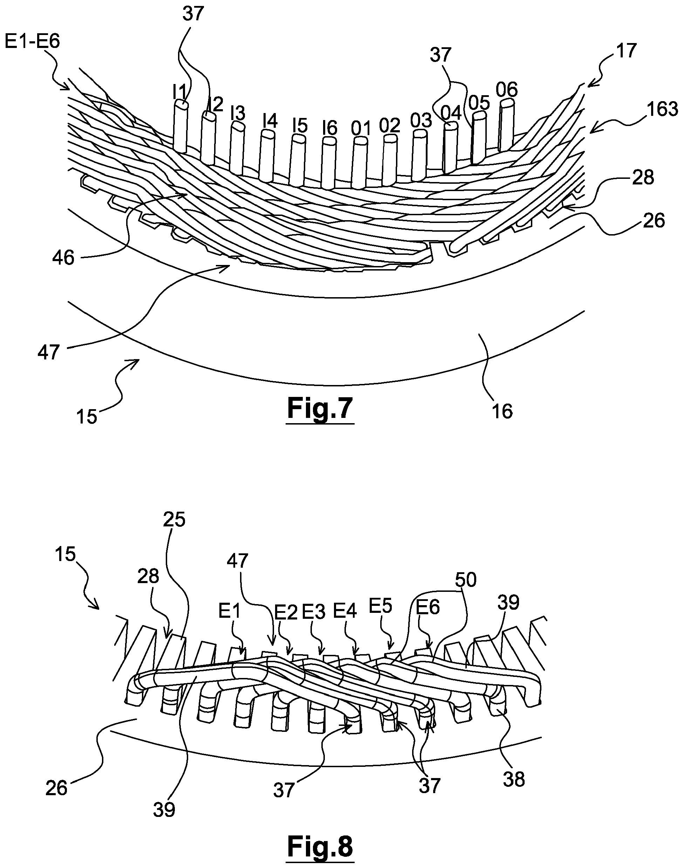

Le bobinage 17 présente en outre une discontinuité. En effet, comme cela est montré à la figure 7 et à la figure 5, le bobinage 17 comporte une partie 46 dite "régulière" dans laquelle, pour chaque enroulement de phase E1-E6, des structures de segment 38 sont reliées chacune, via deux structures de boucle 39, à deux structures de segment 38 adjacentes situées dans deux encoches 28 différentes.

Le bobinage 17 comporte également une partie 47 dite "irrégulière" située sur la figure 7 du côté de la périphérie externe du stator 15, dans laquelle, pour chaque enroulement de phase E1-E6, au moins une structure de segment 38 est reliée via deux structures de boucle 39 à deux structures de segment 38 superposées radialement l'une par rapport à l'autre dans une même encoche 28. Comme cela est bien visible à la figure 5, l'enroulement E1 présente ainsi dans l'encoche 28 la plus à gauche une structure de segment 38 reliée via deux structures de boucle 39 à deux structures de segment 38 superposées radialement l'une par rapport à l'autre dans l'encoche 28 adjacente de droite. En variante, la partie irrégulière 47 est située du côté de la périphérie interne du stator 15.

De préférence, comme cela est représenté à la figure 8, dans la partie de bobinage irrégulière 47, les enroulements de phase E1-E6 comportent chacun au moins une structure de boucle 39 présentant des ajustements radiaux 50, en sorte que ces structures de boucle 39 qui relient des structures de segment 38 se situant dans des couches de conducteurs identiques ne se chevauchent pas. Ces ajustements radiaux 50 sont définis par des parties d'un conducteur 37 s'étendant radialement par rapport à l'axe du stator 15 de manière à éviter les structures de boucle 39 des autres enroulements de phase reliant des structures de segment 38 se situant dans la même couche.

Il est à noter que pour le premier enroulement de phase E1 se situant à une extrémité des séries d'encoches 28 associées aux différentes phases, la structure de boucle 39 qui relie deux structures de segment 38 positionnées dans la même couche ne nécessitent pas d'être configurée pour éviter les structures de boucle 39 des autres enroulements de phase. En conséquence, cette structure de boucle 39 est dépourvue d'ajustement radial 50.

En outre, si on définit un premier type de structures de boucle 39 assurant une liaison de structures de segment 38 consécutifs reçues dans les encoches 28 situées dans une même couche C1-C8 de conducteurs 37, et un deuxième type de structures de boucle 39 assurant une liaison de structures de segment 38 consécutifs reçues dans les encoches 28 situées dans des couches C1-C8 de conducteurs 37 différentes, le bobinage 17 est réalisé de manière que moins de 10 pourcents de l'ensemble des structures de boucle 39 sont du premier type de structures de boucle 39.

En mettant en œuvre des structures de segment 38 qui changent de couches en proportion importante, on limite ainsi les contraintes sur les fils 44 des chignons de bobinage 163 au moment d'un changement de tour de la nappe de bobinage 52 autour du stator 15 comme cela est expliqué ci-après.

En outre, grâce à l'alternance avant-arrière majoritaire du bobinage, on limite le nombre des ajustements radiaux 50 du fait de la mise en place en parallèle des structures de boucle 39 successives associés aux enroulements de phase E1-E6 suivant la direction de passage d'une couche C1-C8 à une autre.

Comme on peut le voir à la figure 6, les structures de boucle 39 forment des lames stationnaires qui sont inclinées suivant une direction D1 autour de l'axe X du stator 15 en conformité avec une direction d'un fluide de refroidissement. Par rapport à une position radiale des lames, ces lames sont inclinées dans un sens correspondant au sens de rotation du rotor. Cela permet ainsi d'améliorer l'écoulement du fluide de refroidissement, en général de l'air, à l'intérieur de la machine électrique afin d'optimiser son refroidissement. Les structures de boucle 39 sont inclinées de manière à être sensiblement parallèles deux à deux, pour des structures de segment 39 adjacentes. Une circulation du fluide de refroidissement est assurée par des pales fixées à un rotor orientées sensiblement radialement par rapport à l'axe du stator 15.

En outre, une telle configuration permet à chaque chignon 163 du bobinage 17 d'être de hauteur générale limitée. La hauteur de chaque chignon de bobinage est ainsi inférieure à 33 % d'une hauteur du corps 16 du stator 15, ce qui permet d'économiser du cuivre dans les chignons pour une même performance de la machine, dans la mesure où seul le cuivre présent dans les encoches permet de générer le courant de la machine électrique. Les chignons du bobinage 17 sont positionnés de préférence exclusivement à l'intérieur d'une périphérie externe du stator 15, afin de faciliter l'intégration de la machine dans l'environnement sous-capot du véhicule.

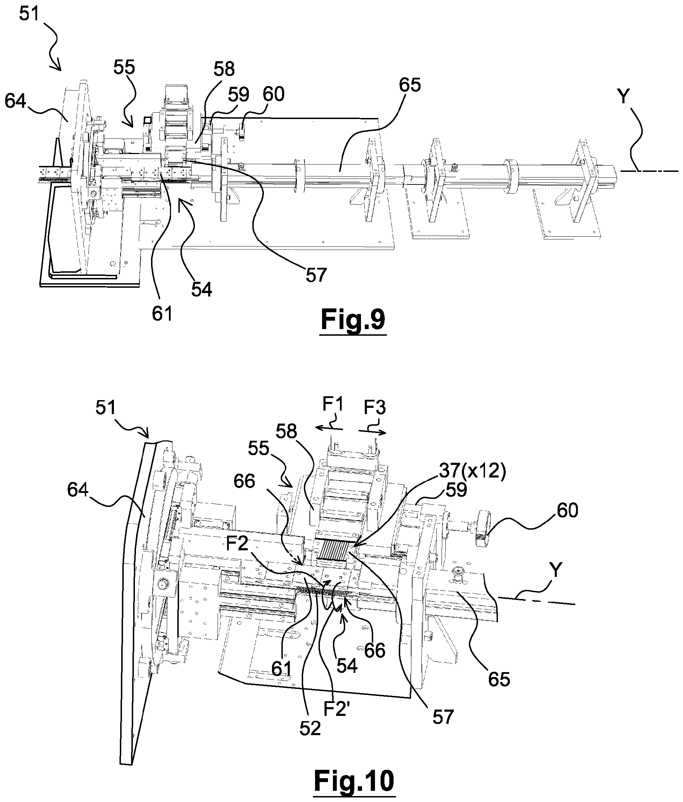

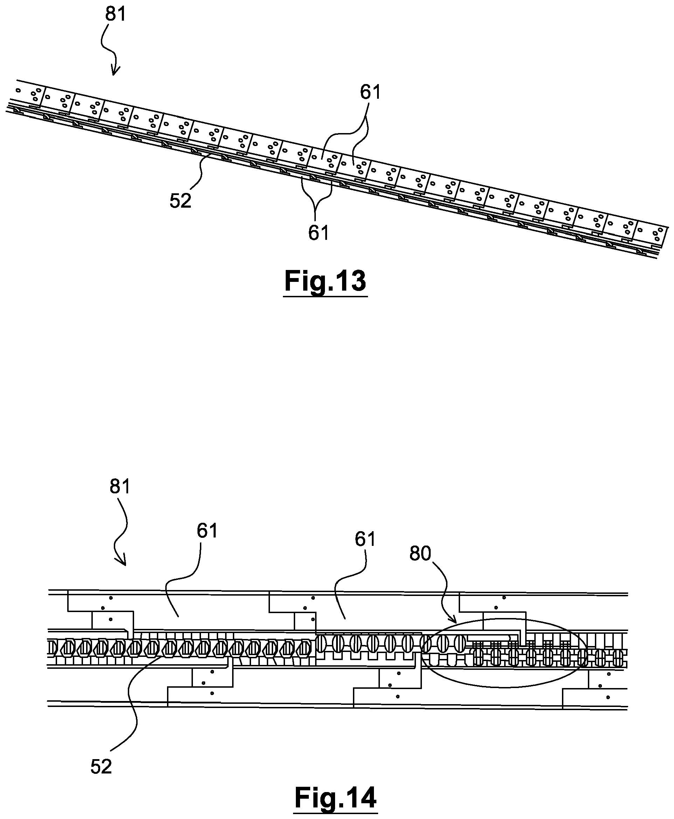

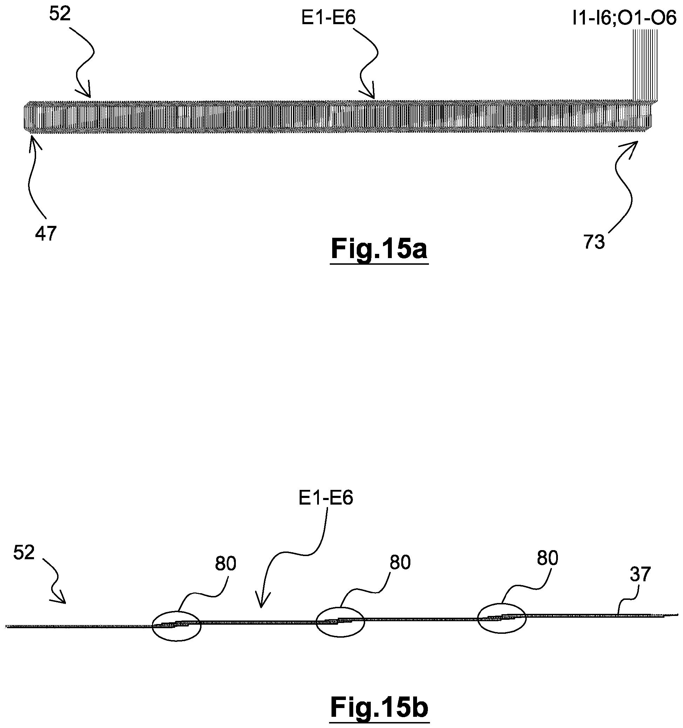

On a représenté aux figures 9 et 10 une installation 51 permettant de former une nappe de bobinage 52 bien visible sur les figures 14, 15a, et 15b utilisée pour la réalisation du stator 15 hexaphasé selon l'invention. Cette installation 51 comporte une unité d'enroulement 54 s'étendant suivant une direction longitudinale Y et une unité d'amenage 55 des conducteurs 37 s'étendant sensiblement transversalement par rapport à l'unité d'enroulement 54.

Plus précisément, l'unité d'amenage 55 des conducteurs 37 comporte une tête de guidage 57 de conducteurs 37 solidaire d'un support mobile 58 en translation suivant l'axe Y par rapport à un châssis fixe 59. Le déplacement du support mobile 58 et de la tête de guidage 57 est effectuée au moyen d'un dispositif de manœuvre référencé 60.

Par ailleurs, l'unité de bobinage 51 comporte une unité d'enroulement 54 destinée à recevoir successivement des stockeurs 61 décrits plus en détails ci-après. L'unité d'enroulement 54 est apte à tourner avec le stockeur 61 qu'elle porte autour de l'axe Y par rapport à un châssis fixe 64 de forme annulaire. L'unité d'enroulement 54 est également configurée pour déplacer en translation les stockeurs 61 vers une unité de rangement 65.

L'unité d'enroulement 54 comporte en outre sur ses deux bords latéraux longitudinaux opposés des clavettes 66 visant à assurer le maintien des conducteurs 37 lors de la rotation de l'unité d'enroulement 54 par rapport à l'unité d'amenage 55 des conducteurs 37. Les clavettes 66 présentent également un écartement variable afin de pouvoir faire varier une hauteur des couches de conducteurs lors de la réalisation de la nappe de bobinage.

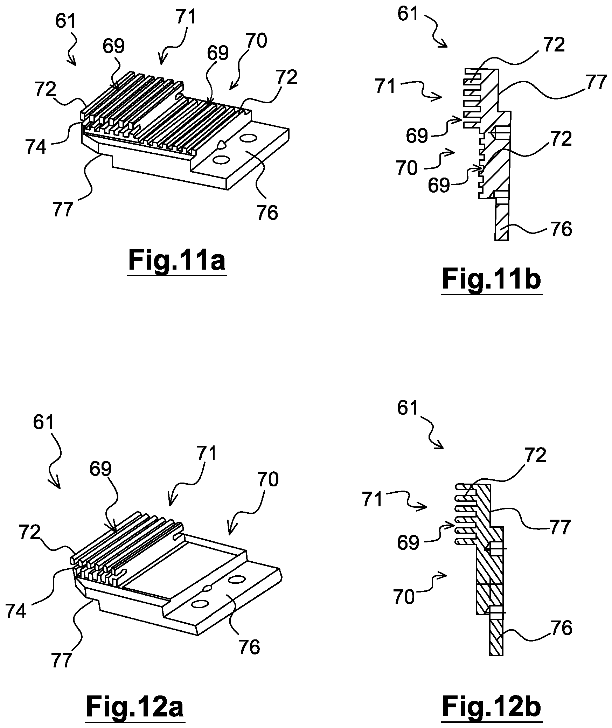

Le procédé de bobinage est basé sur l'utilisation des stockeurs 61 montrés sur les figures 11a, 11b, 12a et 12b et destinés à être mis en place successivement sur l'unité d'enroulement 54. Chaque stockeur 61 consiste en un élément globalement parallélépipédique d'orientation longitudinale.

Chaque stockeur 61 comporte des encoches 69 transversales agencées sur deux étages 70, 71 qui débouchent transversalement dans les faces latérales du stockeur 61. Ces encoches 69 délimitées deux à deux par des dents 72 sont réparties longitudinalement selon un pas constant le long du stockeur 61.

Dans le mode de réalisation des figures 11a et 11b, chaque stockeur 61 présente un étage bas 70 muni de petites dents 72 et un étage haut 71 muni de grandes dents 72, c'est-à-dire de dents 72 plus hautes que les petites dents 72 de l'étage bas 70. Les grandes dents 72 pourront comporter des échancrures latérales 74 du côté de leurs extrémités longitudinales pour permettre le passage des clavettes 66. Ces encoches 69 sont destinées à recevoir les structures de segment 38 de la nappe de bobinage 52.

L'étage bas 70 comporte un nombre d'encoches 69 successives égal au nombre de phases, ici six encoches 69. L'étage haut 71 comporte un nombre d'encoches 69 égal au nombre de phases moins un, soit ici cinq encoches 69.

Ces stockeurs 61 comportent des formes d'emboîtement dites doubles, pour réaliser un emboîtement en série et en parallèle des stockeurs 61 entre eux. A cet effet, chaque stockeur 61 comporte à une de ses extrémités longitudinales une forme de languette 76 destinée à coopérer avec un évidement 77 de forme complémentaire d'un stockeur 61 adjacent positionné en série.

En outre, du fait de la configuration étagée des stockeurs 61, deux stockeurs 61 pourront coopérer l'un avec l'autre en les positionnant en regard l'un de l'autre. Le positionnement est effectué en sorte que les dents 72 de l'étage bas 70 d'un premier stockeur 61 se situent en regard des dents 72 de l'étage haut 71 d'un deuxième stockeur 61, et que les dents 72 de l'étage haut 71 du premier stockeur 61 se situent en regard des dents 72 de l'étage bas 70 du deuxième stockeur 61. Ces stockeurs 61 entre lesquels est positionnée la nappe de bobinage 52 peuvent ainsi assurer un guidage et un maintien des conducteurs de la nappe 52.

Par ailleurs, on pourra également utiliser un autre mode de réalisation des stockeurs 61 montrés sur les figures 12a et 12b ayant un étage bas 70 dépourvu de dent 72. Ces stockeurs 61 permettant également de réaliser un emboîtement double seront utilisés dans une zone de compensation de niveau 80 de la nappe de bobinage 52, afin de limiter les contraintes dans les conducteurs de la nappe 52 lors de l'enroulement de la nappe 52 autour du stator. Cela est expliqué plus en détails ci-après.

On décrit ci-après les différentes étapes du procédé de bobinage basé sur l'utilisation d'un fil 44 unique par enroulement phase E1-E6, soit six fils pour un bobinage hexaphasé. L'homme du métier saura adapter le bobinage à un mode de réalisation pentaphasé ou heptaphasé. Les fils 44 pourront provenir chacun d'un conteneur non représenté dans lequel est placée une bobine de fil 44.

Plus précisément, le procédé comporte une étape de pré-formation consistant à déplacer, par rapport au faisceau de conducteurs 37, l'unité d'enroulement 54 de manière à obtenir un faisceau de conducteurs 37 présentant pour chaque enroulement de phase E1-E6 au moins deux structures de boucle 39 et au moins trois structures de segment 38. Deux desdites structures de segment 38 sont positionnées de manière à pouvoir être disposées dans la même encoche 28 du stator 15. Les deux structures de boucle 39 relient respectivement les deux structures de segment 38 superposées à la troisième structure de segment 38. Les deux structures de segment 38 sont positionnées en face l'une de l'autre de part et d'autre de l'unité d'enroulement 54. Cette étape correspond à l'obtention de la partie irrégulière 47 du bobinage.

Cette étape de préformation permet de dédoubler le nombre de conducteurs 37 par rapport au nombre de fils 44 initial, en sorte que le faisceau de conducteurs 37 alimentant l'unité d'enroulement 54 suite à cette étape est égal à 12 comme on peut le voir à la figure 10.

On réalise ensuite une étape de formation consistant à déplacer par rapport au faisceau de conducteurs 37 l'unité d'enroulement 54 de manière à former, sur un stockeur 61, une portion de chacun des enroulements de phase E1-E6 comportant chacun deux conducteurs 37 ayant au moins une structure de boucle 39 et au moins deux structures de segment 38, ladite structure de boucle 39 reliant les deux structures de segment 38. L'étape de formation des enroulements de phase E1-E6 est effectuée en sorte que des structures de segment 38 de deux conducteurs 37 constituant un même enroulement de phase E1-E6 (c'est-à-dire issus d'un même fil 44) sont positionnées alternativement dans une couche inférieure et une couche supérieure de la nappe de bobinage 52. Cette étape correspond à l'obtention de la partie régulière de bobinage 46.

A cet effet, après mis en place d'un stockeur 61 sur l'unité d'enroulement 54 en regard de la tête de guidage 57, le dispositif de manœuvre 60 est actionné de manière à déplacer en translation la tête de guidage 57 et le faisceau de conducteurs 37 associé par rapport à l'unité d'enroulement 54. Le déplacement du faisceau de conducteurs 37 est effectué en direction opposée de l'unité de rangement 65 suivant la flèche F1 et suivant un pas P correspondant au nombre de phases, soit ici un pas de six encoches 69.

Une clavette 66 est mise en place du côté opposé de la tête de guidage 57 pour assurer un maintien en tension du faisceau de conducteurs 37 lors de l'enroulement. On réalise alors l'étape d'enroulement consistant à faire tourner l'unité d'enroulement 54 par rapport au faisceau de conducteurs 37 de 180 degrés suivant la flèche F2. On déroule ainsi le faisceau de fils 44, ce qui a pour effet de remplir le stockeur 61.

Puis l'unité d'amenage 55 de conducteurs 37 et le stockeur 61 initial sont translatés ensemble en direction de l'unité de rangement du bobinage 65 suivant le pas P correspondant au nombre de phases, soit ici un pas de six encoches. Cette translation est ainsi effectuée suivant la flèche F3.

Un nouveau stockeur 61 est positionné en sorte que les encoches 69 de l'étage haut 71 du nouveau stockeur 61 se situent en regard des encoches 69 de l'étage bas 70 du stockeur précédent 61 et que les encoches 69 de l'étage bas 70 du nouveau stockeur 61 reçoivent les conducteurs 37 lors du prochain enroulement.

On répète les étapes précédentes jusqu'à obtenir une nappe de bobinage 52 couvrant une circonférence de stator 15.

Le procédé comporte en outre une étape de compensation consistant à compenser un changement de niveau de la nappe 52 lorsqu'un enroulement de la nappe 52 couvre une circonférence de stator 15. A cette fin, la formation de la pluralité d'enroulements de phase E1-E6 étant effectuée en tournant l'unité d'enroulement 54 dans le sens donné suivant la flèche F2, lorsque la nappe 52 a atteint une longueur sensiblement égale à la circonférence du stator 15, on réalise l'étape de compensation consistant à réaliser une étape de formation de ladite pluralité d'enroulements de phase E1-E6 en tournant dans un sens opposé F2' audit sens donné (soit un sens de rotation opposé à la flèche F2), de manière à former au moins une structure de boucle 39 et au moins deux structures de segment 38 pour chacun des enroulement de phase E1-E6. Une fois l'étape de compensation réalisée, on poursuit la formation les enroulements de phase E1-E6 autour de l'unité d'enroulement 54 en tournant dans ledit sens donné suivant la flèche F2.

En effet, on précise que lorsque la nappe 52 est enroulée autour du stator 15, il existe un décalage radial au moment du changement de couche après une circonférence de stator. En effet, la nappe 52 doit alors se superposer sur une couche de nappe de l'enroulement précédent.

L'étape de compensation permet ainsi de réaliser des zones de compensation de niveau 80 visibles sur les figures 14 et 15b accompagnant le décalage radial de la nappe 52 à l'endroit d'un changement de tour. A cet effet, les zones 80 présentent une différence de niveau qui a une forme complémentaire de la différence de niveau qui existe à l'endroit d'un changement de tour de la nappe autour du stator 15. Le décalage de hauteur de la nappe de bobinage 52 correspond à une hauteur de une couche de conducteurs 37 de la nappe de bobinage 52. L'étape de compensation suivie de l'étape de formation permet ainsi d'obtenir un décalage de hauteur de deux couches de conducteurs 37.

On minimise ainsi les contraintes mécaniques sur les conducteurs 37 de la nappe 52 à l'endroit d'un changement de couche. Etant donné que l'on souhaite obtenir huit couches de conducteurs 37 et que la nappe 52 comporte deux couches de conducteurs 37, la nappe 52 présente un nombre de zones de compensation 80 égal au nombre de couches de conducteurs C1-C8 souhaitées divisé par deux moins un, soit 8/2-1=3.

Les étapes précédentes sont répétées de manière à obtenir la nappe de bobinage 52 visible sur les figures 15a et 15b positionnée à l'intérieur d'un assemblage 81 de stockeurs montré sur les figure 13 et 14.

Il est à noter qu'il existe deux façons de produire une nappe 52 selon l'invention consistant soit en la méthode précédemment décrite, soit en une méthode nécessitant une inversion des sens de rotations F2 et F2' respectivement au moment de l'étape de formation et au moment de l'étape de compensation.

La nappe obtenue 52 comprend deux couches de conducteurs, et à une de ses extrémités une partie irrégulière 47 et à son autre extrémité les entrées 11-16 et les sorties de phase O1-O6, la partie de la nappe qui porte ces entrées et sorties étant appelée dans la suite du document partie de connexions 73.

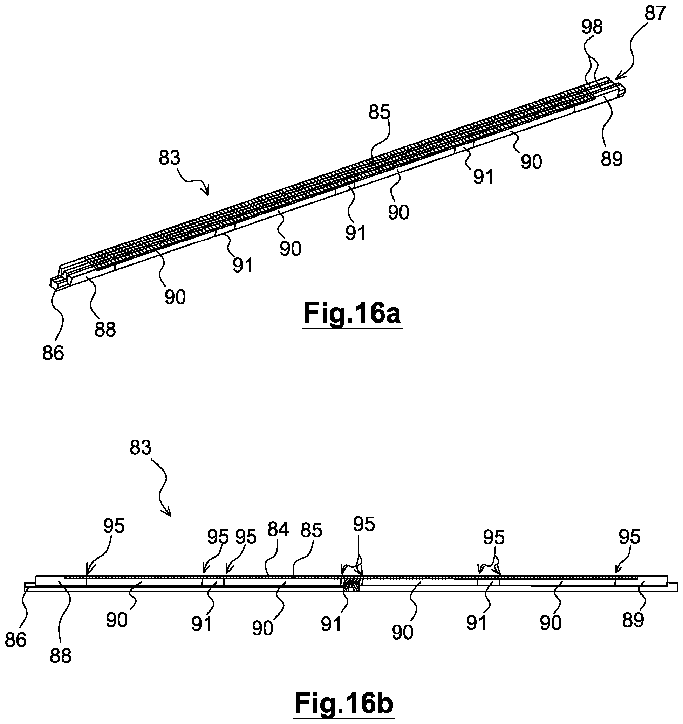

La nappe 52 est mise en place sur un peigne modulaire 83 de transfert visible sur les figures 16a et 16b comportant des encoches 84 délimitées deux à deux par des dents 85. Les encoches 84 du peigne 83 présentent des dimensions analogues à celles du stator 15. Le peigne 83 est monté mobile en translation sur un rail 86. A cet effet, le peigne 83 comporte dans sa partie inférieure une cavité 87 s'étendant longitudinalement destinée à coopérer avec le rail 86.

Plus précisément, le peigne modulaire 83 est composé de deux parties extrêmes 88 et 89, ainsi que d'une pluralité de parties centrales 90 et de parties intermédiaires 91 de changement de couche.

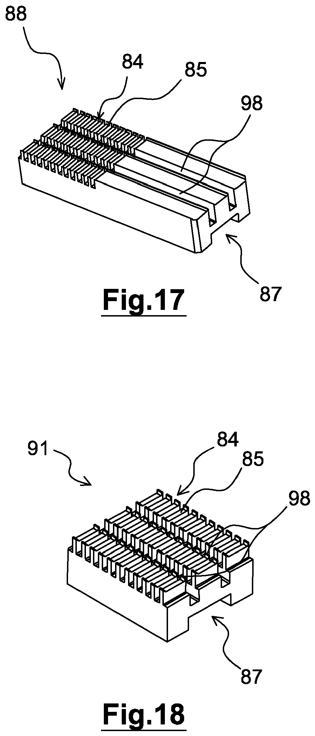

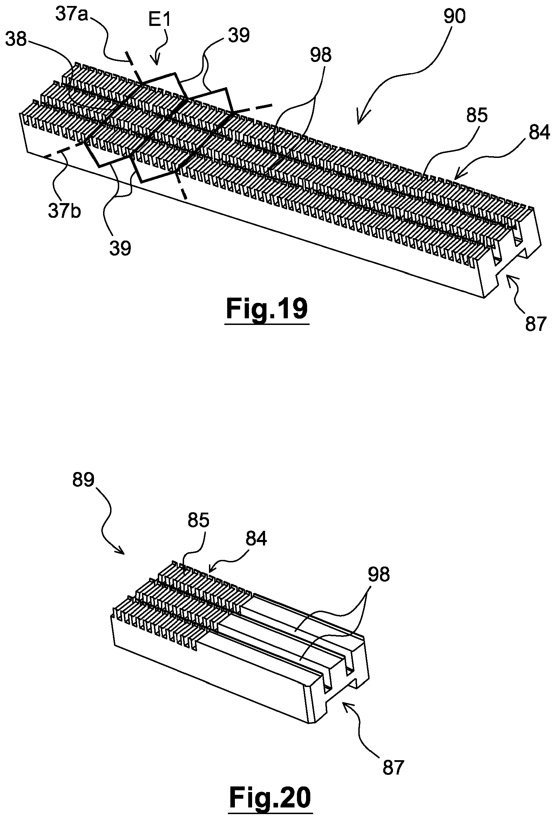

Plus précisément, les parties 88 et 89 visibles respectivement sur les figures 17 et 20 sont sensiblement identiques. Ces parties 88 et 89 sont destinées à recevoir respectivement la partie irrégulière 47 et la partie de connexions 73. Par ailleurs, les parties centrales 90 sont destinées à recevoir les portions de la nappe 52 correspondant à une circonférence du stator 15 (cf. figure 19), tandis que les parties intermédiaires 91 sont destinées à recevoir les zones de compensation 80 (cf. figure 18). Les parties centrales 90 et les parties intermédiaires 91 de changement de couches sont aboutées les unes aux autre de manière alternative.

Le peigne modulaire 83 pourra ainsi s'adapter à la configuration du bobinage 17 du stator 15, en particulier au nombre de couches C1-C8 et à la circonférence du stator 15, en modifiant simplement les dimensions et le nombre des parties centrales 90 et des parties intermédiaires 91. Les encoches 84 situées au niveau d'une jonction 95 entre deux parties 88-91 présentent de préférence une ouverture plus grande que les autres encoches 84. En outre, chaque partie 88-91 du peigne 83 comporte de préférence des rainures longitudinales 98, en l'occurrence au nombre de deux pour autoriser le passage de guides 107 à surface inclinée permettant le transfert de la nappe de bobinage 52 vers une broche annulaire 105, comme cela est décrit plus précisément ci-après.

La nappe de bobinage 52 comporte deux couches de conducteurs 37 superposées l'une sur l'autre. On distingue ainsi une couche inférieure de conducteur 37 située du côté du fond des encoches 84 du peigne et une couche supérieure située du côté de l'ouverture des encoches 84 du peigne.

Comme on peut le voir à la figure 19, chaque conducteur 37 de la nappe 52 obtenue forme des ondulations longitudinales comportant successivement une structure de segment 38 qui est reçu dans une encoche associée, une structure de boucle 39 qui s'étend en vis-à-vis de la face latérale inférieure du peigne 83, une structure de segment 38 consécutive qui est reçue dans une encoche 84 associée consécutive, une structure de boucle 39 qui s'étend en vis-à-vis de la face latérale supérieure du peigne 83.

Les structures de boucle 39 sont agencées alternativement de part et d'autre du peigne 83, c'est-à-dire qu'ils sont décalés longitudinalement d'un pas équivalent à la distance entre deux structures de segment 38 consécutives.

D'une manière similaire à celles du corps 16 du stator 15, les encoches 84 du peigne sont associées par série aux conducteurs 37 d'un enroulement de phase E1-E6. Ainsi, les encoches 84 d'une série d'encoches 84 reçoivent les structures de segment 38 des conducteurs 37 constituant un enroulement de phase E1-E6. Chaque série d'encoches 84 est associée à un des six enroulements de phase E1-E6. Ainsi, deux encoches 84 consécutives d'une même série d'encoches 84 sont séparées par des encoches dont chacune appartient à l'une des autres série d'encoches 84. Les encoches 84 de chaque ensemble d'encoches associées à un enroulement de phase E1-E6 sont ainsi réparties sur le peigne de transfert 83 à un pas constant égal au nombre de phases, c'est-à-dire ici avec un pas de six encoches 84.

Autrement dit, les structures de segment 38 sont insérées dans les encoches 84 du peigne avec un pas polaire égal au pas polaire du stator 15.

Dans un enroulement de phase E1-E6, les structures de segment 38 successives d'un même conducteur 37 sont positionnées alternativement dans une couche interne et une couche externe sur la majorité de la longueur du peigne 83. Ainsi, pour une paire de conducteurs 37a, 37b issus d'un même fil 44 et dans une encoche donnée de la série, la structure de segment 38 du conducteur 37a se trouve dans la couche C1, tandis que la structure de segment 38 du conducteur 37b se situe dans la couche C2. La structure de segment 38 du conducteur 37a se trouve dans la couche C2 de l'encoche successive de la série, tandis que la structure de segment 38 du conducteur 37b se situe dans la couche C1. Dans tous les cas, les deux structures de segment 38 sont superposées l'une sur l'autre dans chaque encoche 84.

Par ailleurs, pour deux encoches 84 adjacentes d'une série d'encoches associée à un enroulement de phase E1-E6, la nappe de bobinage 52 présente deux structures de boucle 39 situées de part et d'autre du peigne 83 reliant des structures de segment 38 se situant dans lesdites encoches 84 adjacentes. Ainsi, la structure de boucle 39 d'un des conducteurs 37a qui relie les structures de segment 38 reçues dans les deux encoches 84 adjacentes mentionnées précédemment est agencé axialement au-dessus de la face supérieure du corps 16, alors que la structure de boucle 39 de l'autre conducteur 37b qui relie les structures de segment 38 reçues dans les deux encoches 84 adjacentes mentionnées précédemment, est agencé axialement au-dessous de la face inférieure du corps 16. La relation est inversée pour les deux encoches adjacentes 84 suivantes.

En outre, pour deux encoches 84 adjacentes de la série associée à un enroulement de phase E1-E6, la structure de boucle 39 du conducteur 37a relient une structure de segment 38 appartenant à la couche inférieure de la nappe 52 à une structure de segment 38 appartenant à une couche supérieure de la nappe 52; tandis que la structure de boucle 39 de l'autre conducteur 37b relie une structure de segment 38 appartenant à une couche supérieure de la nappe 52 à une structure de segment 38 appartenant à une couche inférieure de la nappe 52. La relation est inversée pour les deux encoches 84 adjacentes suivantes.

La nappe de bobinage 52 présente en outre une discontinuité. En effet, la nappe 52 comporte une partie dite "régulière" dans laquelle les structures de segment 38 de chaque enroulement de phase E1-E6 sont reliées chacune, via des structures de boucle 39, à deux structures de segment 38 situées dans deux encoches 84 différentes. La nappe 52 comporte également une partie dite "irrégulière" obtenue à l'issue de l'étape de pré-formation dans laquelle au moins une structure de segment 38 de chaque enroulement de phase E1-E6 est reliée à deux structures de segment 38 superposées axialement l'une par rapport à l'autre dans une même encoche 84. Par ailleurs, les zones de compensation 80 précédemment décrites sont situées dans les parties intermédiaires 91 du peigne 83.

Le nombre d'encoches 84 du peigne 83 correspondant à la longueur de la nappe de bobinage 52 est déterminé en fonction du nombre de couches de conducteurs 37 de chaque enroulement de phase E1-E6, et en fonction du nombre d'encoches 28 du corps 16, de manière que la nappe 52 permette de former un nombre entier de couches de conducteurs. Dans le cas où l'on souhaite former huit couches de conducteurs 37 sur un corps 16 comportant 96 encoches, le peigne 83 comporte 96x4+6=390 encoches. Le nombre 6 correspond aux 6 encoches de la partie irrégulière 47 dans le cas d'un stator hexaphasé. Autrement dit, la longueur de la nappe de bobinage 52 est sensiblement égale à N/2 fois la circonférence du stator 15, N étant le nombre de couches de conducteurs 37 souhaitées dans le stator 15 bobiné. N est supérieur ou égal à deux.

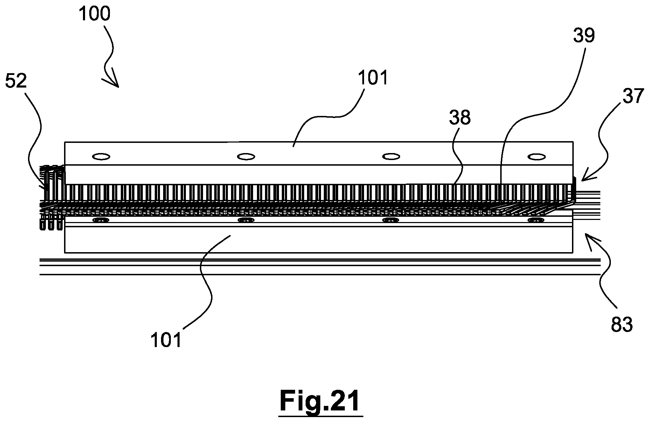

De préférence, on réalise également une étape de pressage des chignons du bobinage 17 à l'aide d'un outil de conformage 100 montré sur la figure 21. Cet outil de conformage 100 comporte à cette fin deux plaques de serrage 101 entre lesquelles sont positionnés les structures de boucle 39 s'étendant en saillie d'un côté du peigne 83 avant écrasement contrôlé desdites structures de boucle 39 entre les deux plaques 101 suivant une direction axiale. On réduit ainsi l'épaisseur de la nappe 52, afin d'obtenir le dimensionnel de chignon souhaité. Le peigne modulaire 83 permet en outre de maintenir l'écartement des conducteurs 37 lors du conformage du chignon.

Postérieurement à la mise en place de la nappe de bobinage 52 sur le peigne de transfert 83 et à l'étape de conformage des chignons, le procédé de réalisation du stator bobiné 15 comporte une étape de transfert des conducteurs 37 de la nappe 52 située dans les encoches 84 du peigne 83 vers la broche annulaire 105. Cette étape consiste globalement à enrouler la nappe 52 de conducteurs 37 autour de la broche annulaire 105 pour former les couches des enroulements de phase E1-E6. Cet enroulement de la nappe 52 peut être réalisé en commençant par une des deux extrémités de la nappe 52 à savoir la partie irrégulière 47 ou la partie de connexions 73.

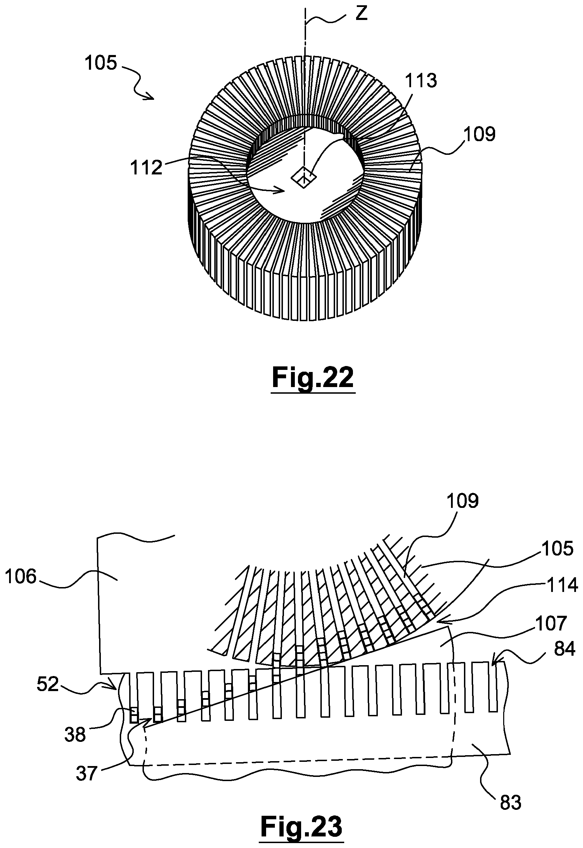

On a représenté aux figures 22 et 23, les différents éléments permettant la mise en oeuvre de cette étape composés d'une broche annulaire 105, un carter de guidage 106 de la broche annulaire 105 en déplacement par rapport au peigne de transfert 83, et deux guides longitudinaux 107.

Comme on peut le voir plus en détails à la figure 22, la broche annulaire 105 est un élément de révolution d'axe principal Z qui comporte des encoches 109 réalisées dans la face cylindrique externe de la broche annulaire 105 et débouchant axialement dans les faces d'extrémité axiale de la broche annulaire 105.

La distance entre les extrémités radiales externes de deux encoches 109 adjacentes de la broche annulaire 105 est égale à la distance entre deux encoches 84 adjacentes du peigne de transfert 83. Le nombre d'encoches 109 de la broche annulaire 105 est égal au nombre d'encoches 28 du corps 16 de stator 15, c'est-à-dire qu'ici la broche annulaire 105 comporte 96 encoches.

La broche annulaire 105 comporte en outre un moyeu central 112 qui est fixé à la face cylindrique interne de la broche annulaire 105. Ce moyeu 112 est muni d'une ouverture centrale 113 autorisant le passage d'un arbre (non représenté) pour permettre l'entraînement en rotation de la broche annulaire 105 autour de son axe Z.

Le carter 106 comporte un alésage coaxial 114 à la broche annulaire 105 et dans lequel la broche annulaire 105 est reçue libre à rotation autour de son axe Z. L'alésage 114 du carter 106 est débouchant dans la face inférieure du carter 106, pour permettre le transfert des conducteurs 37 vers la broche annulaire 105.

Les guides 107 sont destinés à être reçus dans les rainures longitudinales 98 du peigne de transfert 83. Ainsi, le peigne de transfert 83 est guidé longitudinalement sans jeu au cours de cette étape de transfert de la nappe de bobinage 52 autour de la broche annulaire 105.

Chaque guide 107 comporte une face supérieure en forme de rampe, dont l'inclinaison est déterminée de manière que chaque face supérieure est apte à s'appuyer sous les structures de segment 38 des conducteurs 37, de manière à entraîner progressivement les conducteurs 37 vers le haut, pour leur transfert vers la broche annulaire 105.

Selon le mode de réalisation représenté à la figure 23, la face supérieure de chaque guide 107 est plane et est inclinée par rapport à un plan horizontal. Cependant, il sera compris que la forme de la face supérieure de chaque guide 107 peut être différente, par exemple, la face supérieure peut être convexe bombée vers le haut, concave ouverte vers le haut, ou bien elle peut former deux plans inclinés selon des angles différents.

Plus précisément, l'étape de transfert consiste à faire rouler la broche annulaire 105 sur la face supérieure du peigne de transfert 83 de manière que les encoches 109 de la broche annulaire 105 viennent successivement en vis-à-vis avec les encoches 84 du peigne de transfert 83 et sans glissement de la broche annulaire 105 par rapport au peigne de transfert 83. Pour ce faire, on positionne une des deux extrémités de la nappe 52 à proximité de la broche 105 qui reçoit en premier soit la partie irrégulière 47 soit la partie de connexion 73.

Lors du roulage de la broche annulaire 105, le peigne 83 monté sur le rail 86 se déplace relativement par rapport aux guides 107 de manière synchronisée avec la rotation de la broche annulaire 105. La face supérieure de chaque guide 107 s'appuie alors vers le haut contre les structures de segment 38 des conducteurs 37 qui sont situés au niveau de l'extrémité inférieure de chaque encoche 84 du peigne de transfert 83. Ainsi, les faces supérieures des guides 107 permettent de transférer simultanément les structures de segment 38 et les structures de boucle 39 des conducteurs 37 formant les deux couches de la nappe de bobinage 52.

Comme indiqué précédemment, la broche annulaire 105 comporte un nombre d'encoches 109 qui est égal au nombre d'encoches 28 du corps 16 de stator 15 et le peigne de transfert 83 comporte un nombre d'encoches 84 qui est supérieur au nombre d'encoches 28 du corps 16.

Par conséquent, la broche annulaire 105 effectue plusieurs tours autour de son axe Z lors de son roulage sur la face supérieure du peigne de transfert 83, et la nappe 52 avec ses deux couches de conducteurs 37 s'enroulent autour de la broche 105, en formant des spirales coaxiales.

Etant donné que la broche annulaire 105 effectue plusieurs tours autour de son axe Z, chacune des encoches 109 reçoit successivement les structures de segment 38 qui étaient reçues dans plusieurs encoches 84 du peigne de transfert 83. En l'occurrence, la broche annulaire 105 effectue quatre tours à la partie irrégulière 47 près autour de son axe Z, en sorte que chaque encoche 109 de la broche 105 reçoit huit structures de segment 38 (deux par tours). On obtient ainsi un bobinage à huit couches de conducteurs 37.

De plus, la largeur de chaque encoche 109 de la broche annulaire 105 est sensiblement égale à la largeur de chacun des conducteurs 37. Par conséquent, les structures de segment 38 des conducteurs 37 sont superposées radialement dans les encoches 109 de la broche annulaire 105 suivant une colonne unique.

Dans le cas où le fil 44 utilisé est un fil de section ronde, on réalise préalablement au transfert de la nappe 52 vers la broche 105, une étape de matriçage des structures de segment 38 montrée à la figure 32. A cet effet, la nappe de bobinage 52 est mise en place sur un peigne de matriçage 119 comportant des encoches 120 délimitées deux à deux par des entretoises 121 issues d'un plateau magnétique 118.

Les entretoises 121 sont de préférence profilées du côté de leur extrémité libre, de manière que chaque encoche 120 présente une extrémité évasée pour faciliter l'insertion des structures de segment 38 l'intérieur des encoches 120 du peigne 119. Des cales inférieures 122 rapportées auront été préalablement positionnées au fond des encoches 120 du peigne avant l'insertion des structures de segment 38.

Des cales supérieures 123 rapportées sont mises en place au-dessus des structures de segment 38. Une largeur des cales inférieures 122 et supérieures 123 correspond à une largeur souhaitée des conducteurs 37 après matriçage. Les cales supérieures 123 ont une forme complémentaire des encoches 120 du peigne 119.

Un plateau supérieur 125 assure ensuite un écrasement des structures de segment 38 entre les cales inférieures 122 et les cales supérieures 123. A cet effet, des moyens de serrage 129 assurent un rapprochement des plateaux 118 et 125 l'un vers l'autre, ce qui a pour effet transformer la section ronde initiale des structures de segment 38 de la nappe 52 en une section de forme carrée ou rectangulaire.

L'utilisation des cales rapportées 122, 123 permet de maîtriser la déformation des structures de segment 38 et de faciliter le décollage des conducteurs 37 de la matrice suite à la remontée du plateau supérieur 123.

On note également qu'une telle configuration permet de maximiser le remplissage des encoches 28 du stator 15 tout en facilitant la formation des chignons de bobinage dans lesquels la section ronde des conducteurs facilite le pliage pour former l'onde de bobinage 17.

En variante, on utilise uniquement les cales inférieures 122, les structures de segment 38 étant alors compressées entre des dents du plateau supérieur 125 et les cales inférieures 122.

En variante, l'étape de matriçage est réalisée sur une nappe de bobinage 52 comportant une seule couche de conducteurs 37 soit un seul conducteur 37 par encoche du peigne 119.

Le bobinage 17 étant réalisé à partir de fils 44 de cuivre, le procédé comporte une étape de chauffage à au moins 150 degrés Celcius, par exemple 280 degrés Celsius, du bobinage 17 avant le matriçage pour limiter la déformation macroscopique du cuivre. Le procédé pourra également comporter une étape de recuit après le matriçage de manière que le cuivre retrouve sa structure macroscopique initiale.

En variante, le bobinage est réalisé à partir de fils en aluminium. En variante, l'étape de matriçage pourrait également être mise en oeuvre directement dans le peigne de transfert 83.

Alternativement, l'étape de matriçage est réalisée avant l'étape de formation de la nappe de bobinage 52. Le matriçage pourra alors être réalisé par un ensemble 135 de galets rotatifs entre lesquels passe un conducteur 37 linéaire. L'ensemble 135 de galets comporte à cet effet, une première paire de galets verticaux 136 d'axe horizontal et une deuxième paire de galets horizontaux 137 d'axe vertical. Les galets 136, 137 de chaque paire sont positionnés en vis-à-vis l'un par rapport à l'autre tout en étant légèrement décalés entre eux pour permettre le laminage du conducteur 37.

La longueur des portions matricées et la longueur des portions non matricées dépendent des dimensions du stator 15, en particulier de la longueur des encoches 28 et de l'écart entre deux encoches 28 successives d'une série d'encoches associées à un enroulement de phase E1-E6.

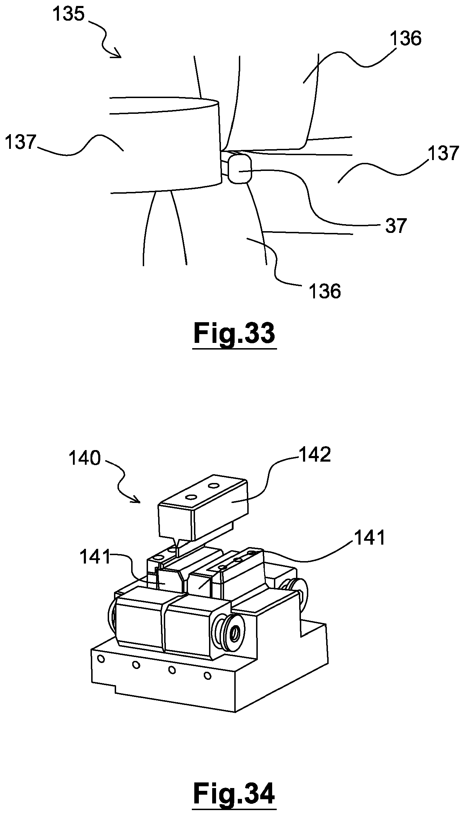

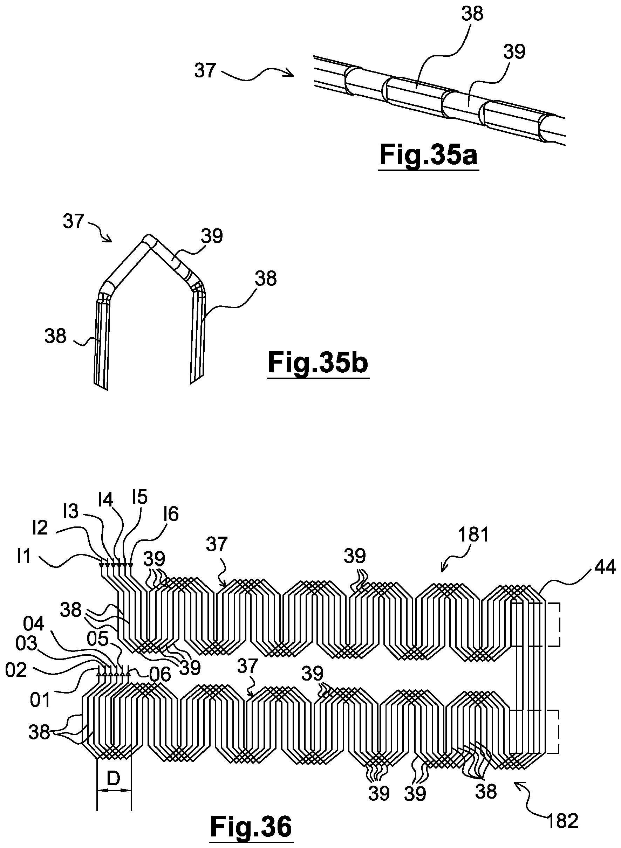

Ainsi, les galets 136, 137 seront dans la position de matriçage sur la longueur des encoches 28, comme cela est représenté sur la figure 33. Les galets 136, 137 seront ensuite éloignés du conducteur 37 sur la longueur des chignons correspondant à la longueur entre deux encoches successives 28. On obtient alors le conducteur 37 montrée à la figure 35a qui comporte des parties matricées correspondant aux structures de segment 38 et des parties non matricées correspondant aux structures de boucle 39. Le conducteur 37 pourra donc être mis en forme dans la nappe de bobinage 52 conformément à la figure 35b avec deux structures de segment 38 parallèles reliées entre elles par une structure de boucle 39.

Dans le mode de réalisation de la figure 34, le matriçage est réalisé par pressage à l'aide d'un dispositif 141 muni de deux mors 141 symétriques mobiles radialement et d'un élément d'écrasement 142 permettant de réaliser des déformations du conducteur 37 sur quatre faces. Les deux mors 141 forment un léger angle entre eux de manière à faciliter une sortie des structures de segment 38 du conducteur 37 après matriçage.

Le matriçage pourra également être effectué sur un faisceau de conducteurs 37 en parallèles à l'aide du peigne 119 comme décrit précédemment ou au moyen d'une série d'ensembles 135 de galets rotatifs ou de dispositifs 141.

Comme indiqué précédemment, il sera possible de réaliser une étape de chauffage et le cas échéant une étape de recuit avant et après l'étape de matriçage et/ou l'étape de conformage des chignons.

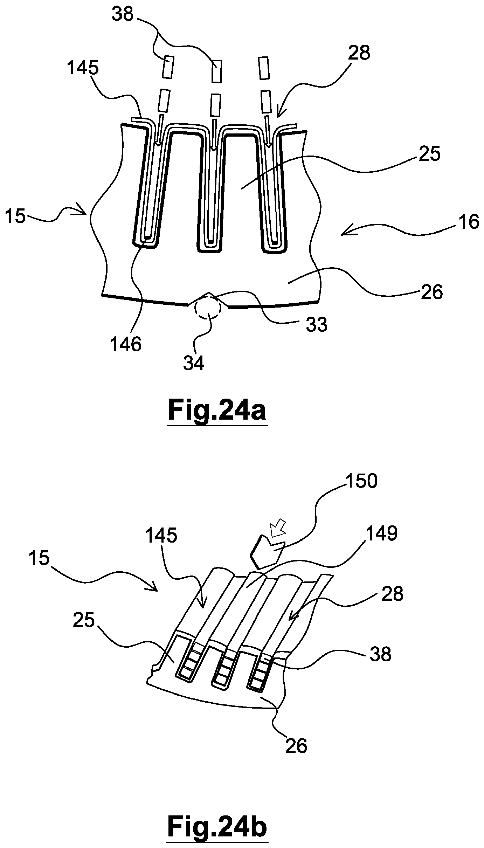

Par ailleurs, comme on peut le voir à la figure 24a, le procédé comporte une étape de mise en place d'un isolant d'encoche continu 145 à l'intérieur des encoches 28 du stator 15. A cet effet, les piges 34 coopèrent avec les évidements 33 des moyens d'indexage externes 32 de manière à positionner une encoche 28 du stator 15 en face de l'isolant d'encoche continu 145. Une cale 146 déplacée radialement de l'intérieur vers l'extérieur du stator 15 assure ensuite un plaquage de l'isolant d'encoche 145 contre les parois internes de chaque encoche 28. L'isolant d'encoche 145 recouvre ainsi les faces internes en vis-à-vis de l'encoche 28 ainsi que le fond de l'encoche 28 correspondant à la partie de la périphérie interne de la culasse 26 s'étendant entre deux dents 25 consécutives. On recommence l'opération en positionnant une nouvelle encoche 28 en face de l'isolant d'encoche 145 jusqu'à ce que toutes les encoches 28 soient recouvertes par l'isolant d'encoche 145 continu.

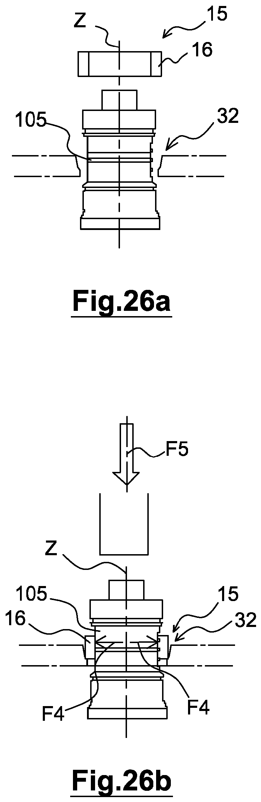

En effet, une fois l'isolant d'encoche 145 mis en place à l'intérieur des encoches 28, on réalise une étape de transfert du bobinage 17 depuis la broche annulaire 105 vers le corps 16 du stator 15, comme cela est montré sur les figures 26a et 26b. Les moyens d'indexage externes 32 permettent d'assurer un positionnement précis de la broche annulaire 105 autour du corps 16 du stator 15. La broche annulaire 105 est reçue coaxialement au corps 16, dans le logement circulaire délimité par la face cylindrique interne du corps 16. Le diamètre de la face cylindrique extérieure de la broche annulaire 105 est globalement égal au diamètre de la face cylindrique interne du corps 16.

Les moyens d'indexage 32 du stator 15 permettent également de positionner angulairement le stator 15 par rapport à la broche annulaire 105 autour de son axe Z, de manière que chaque encoche 109 de la broche annulaire 105 soit en vis-à-vis d'une encoche 28 du corps 16, comme on peut le voir aux figures 26a et 26b.

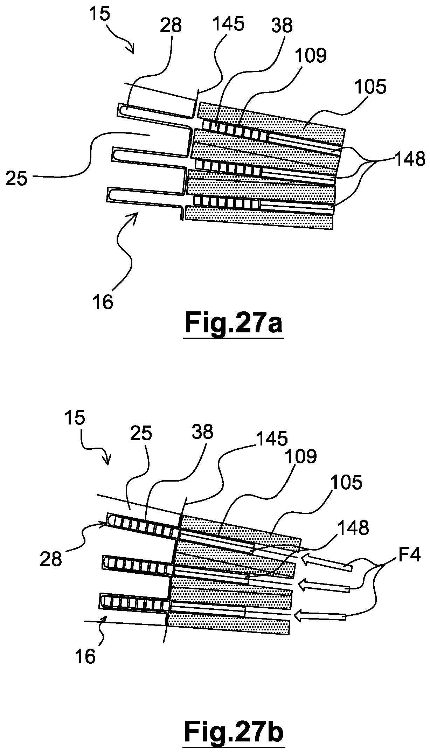

L'installation comporte également des lames 148 d'insertion radiale visibles aux figures 27a et 27b s'étendant chacune dans un plan radial par rapport à l'axe X, Z de la broche 105 et du corps 16. Une lame d'insertion 148 est associée à chaque encoche 109 de la broche annulaire 105. Les lames 148 sont identiques et réparties angulairement autour de l'axe Z de la broche annulaire 105. Ici, la broche annulaire 105 comporte 96 encoches, l'installation comporte par conséquent, 96 lames d'insertion. Ces lames 148 s'étendent dans le plan radial médian de l'encoche 109 associée, et l'épaisseur de chaque lame 148 est légèrement inférieure à la largeur de l'encoche 109 associée.

Plus précisément, comme on peut le voir à la figure 27a, au début de l'étape de transfert, chaque lame 148 est située radialement de manière que le bord d'extrémité radiale externe de chaque lame soit situé au niveau de la couche la plus interne de conducteurs située dans la broche 105.

Lors de la mise en oeuvre de l'étape de transfert par expansion des conducteurs 37, les lames d'insertion 148 sont déplacées radialement par rapport à l'axe Z de la broche annulaire 105 suivant la flèche F4, de manière que chaque lame 148 se déplace radialement dans l'encoche 109 associée vers l'extérieur de la broche annulaire 105 en entraînant simultanément les structures de segment 38, de manière que ces structures de segment 38 sont déplacées dans l'encoche 28 associée du corps 16, formant alors les structures de segment 38 des enroulements de phase E1-E6. Le déplacement des lames 148 est obtenu en appliquant un effort axial suivant la flèche F5 (cf. figure 26b) qui est transformé par un système mécanique en un effort radial appliqué sur les lames 148 suivant la flèche F4.

A l'issue de la phase de transfert, chaque lame 148 est située radialement par rapport à l'axe Z de la broche annulaire 105, de manière que son bord d'extrémité radiale externe est situé globalement au niveau de la face cylindrique externe de la broche annulaire 105. Toutes les structures de segment 38 qui étaient reçues dans chaque encoche 109 de la broche annulaire 105 ont migrés dans une encoche 28 associée du corps 16.

On obtient alors le stator bobiné 15 décrit précédemment. On note que les structures de segment 38 du bobinage situées au niveau de la périphérie externe de la broche 105 se retrouvent par translation au niveau de la périphérie externe du stator 15. De même, les structures de segment 38 du bobinage situées au niveau de la périphérie interne de la broche 105 se retrouvent par translation au niveau de la périphérie interne du stator 15.

Selon une mise en oeuvre préférée, toutes les lames d'insertion 148 sont entraînées simultanément en déplacement radial vers l'extérieur dans les encoches 109 associées de la broche annulaire 105. Ainsi, le transfert de toutes les structures de segment 38 est réalisé de manière simultanée. La largeur de chaque encoche 28 du corps 16 est sensiblement égale à la largeur de chaque conducteur 37, en sorte que l'empilement radial des conducteurs 37 suivant une seule colonne est conservé dans les encoches 28.

On note également que l'utilisation de l'isolant d'encoche continu 145 permet de garantir un positionnement correct de l'isolant d'encoche 145 à l'intérieur des encoches 28 lors d'une insertion des structures de segment 38 du bobinage 17, dans la mesure où les extrémités de l'isolant d'encoche 145 situées du côté ouvert radial de chaque encoche 28 le long des coins des dents 31 sont reliées entre elles et ne peuvent donc pas être repoussés vers le fond des encoches 28 lors de l'insertion des structures de segment 38.

Une fois l'étape de transfert du bobinage 17 réalisée, on réalise une étape de découpe de l'isolant d'encoche 145 montrée sur la figure 24b. Cette étape vise à retirer des parties 149 de l'isolant d'encoche 145 s'étendant entre deux encoches 28 successives, c'est-à-dire les parties 149 de l'isolant d'encoche 145 s'étendant contre la face interne de chaque dent 25. L'étape de découpe de l'isolant d'encoche 145 est effectuée au moyen d'un outil mécanique 150 ou par laser. Les isolants d'encoche ainsi individualisés situés à l'intérieur de chaque encoche 28 présenteront ainsi des traces de découpage le long des coins internes arrondis des dents 25 situées du côté de l'axe X du stator 15.

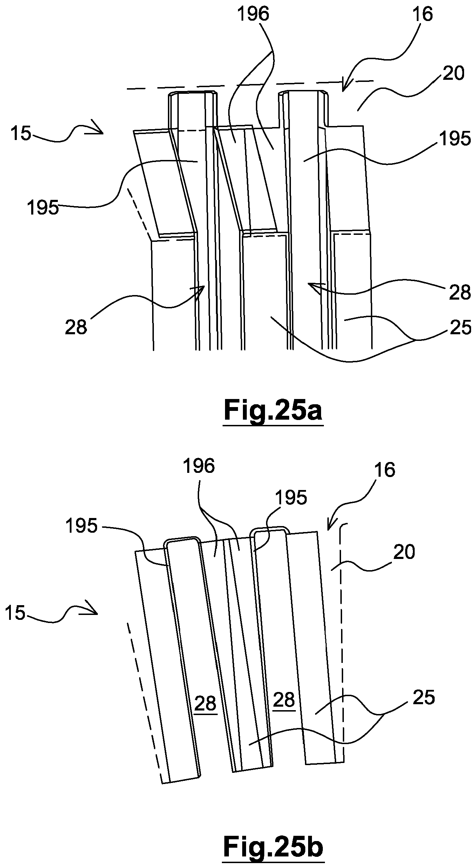

En variante, dans le mode de réalisation montré aux figures 25a et 25b, des isolants d'encoche individuels 195 sont insérés dans les encoches 28 du stator 15. Deux isolants d'encoches 195 consécutifs sont soudés entre eux afin d'assurer un maintien des isolants d'encoche 195 à l'intérieur des encoches 28 lors d'une insertion des conducteurs 37 du bobinage 17.

A cet effet, chaque isolant d'encoche 195 comporte des parois destinées à recouvrir les faces internes des encoches 28 en vis-à-vis ainsi que le fond de l'encoche 28. En outre, chaque isolant d'encoche 195 comporte des ailettes 196 issues des parois plaquées contre les faces internes en vis-à-vis. Ces ailettes 196 sont repliées et plaquées contre au moins une face radiale d'extrémité axiale du corps 16 du stator. Les ailettes 196 de chaque isolant d'encoche 195 sont soudées avec des ailettes 196 correspondantes d'isolants d'encoche 195 adjacents. Autrement dit, deux ailettes adjacentes 196 de deux isolants d'encoche 195 adjacents sont soudées entre elles.

Les isolants d'encoches 195 pourront être soudés entre eux d'un seul côté du stator 15 ou des deux côtés du stator 15. De préférence, afin de faciliter le soudage, les ailettes 196 sont superposées l'une sur l'autre. En variante, la soudure est réalisée bord à bord.

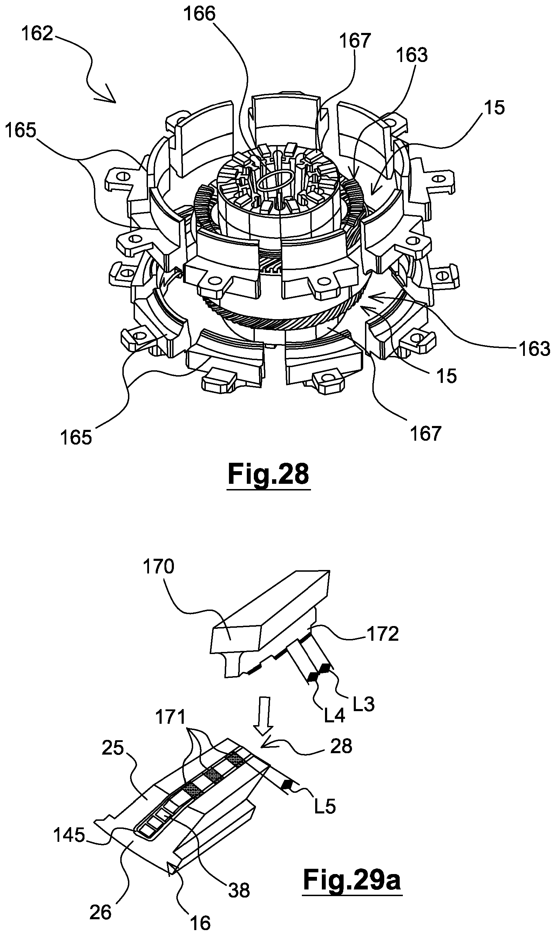

On réalise de préférence une étape de pressage des chignons du bobinage 163 formés par les structures de boucle 39 s'étendant de part et d'autre du stator 15 à l'aide d'un outil 162 montré en figure 28.

A cet effet, l'outil 162 comporte une pluralité d'éléments fixes 165 de maintien destinés à être est mis en place contre une périphérie externe de chaque chignon de bobinage 163. Ces éléments 165 sont positionnés côté à côté suivant une forme annulaire.

Une came centrale 166 est ensuite tournée de manière à déplacer successivement radialement des éléments de pressage 167 en direction de l'élément de maintien 165 correspondant.

Les chignons du bobinage 163 sont ainsi pressés par partie successive, chaque partie étant pressée entre l'élément de maintien 165 et l'élément de pressage 167 correspondant qui se trouve alors dans une position dite "active". Les éléments de pressage 167 pourront comporter des moyens de rappel afin de les faire revenir de leur position active vers leur position initiale une fois qu'ils auront été déplacés par la came 166.

Par ailleurs, les dents 25 du stator 15 étant dépourvues de pieds de dent pour faciliter l'insertion des structures de segments 38, on réalise de préférence une étape de déformation, au moyen d'un poinçon 170, de structures de segment 38 situées dans la couche radiale de conducteurs 37 la plus proche d'un axe du stator 15. Cette étape de déformation illustrée aux figures 29a à 29c permet de garantir le maintien des structures de segment 38 à l'intérieur des encoches 28 avant de réaliser l'étape d'imprégnation. En effet, la déformation au moyen du poinçon 170 permet un fluage de la matière vers les faces internes des encoches 28, en sorte que les bords déformés des structures de segment 38 viennent en appui contre les faces internes des encoches 28.

Suivant une première mise en oeuvre illustrée à la figure 29a, on réalise trois déformations 171 réparties axialement sur chacune des structures de segment 38 situées à la périphérie interne du stator.

Les déformations 171 sont réalisées en sorte qu'un rapport entre une longueur L3 d'une déformation et un écart L4 entre deux déformations 171 successives est compris entre 0.8 et 1.2. Les déformations extrêmes 171 sont espacées d'extrémités axiales correspondantes des structures de segment 38 d'au moins trois millimètres (cf. longueur L5). Les déformations 171 sont réalisées par des protubérances 172 de forme correspondante appartenant au poinçon.

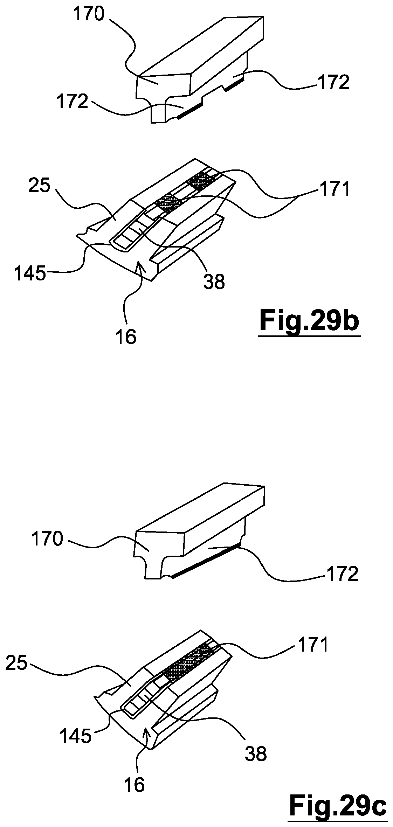

Alternativement, comme cela est représenté à la figure 29b, on réalise deux déformations 171 réparties axialement sur chacune des structures de segment 38 situées à la périphérie interne du stator. Chaque déformation 171 est espacée des extrémités axiales correspondantes des structures de segment 38 d'au moins trois millimètres. Le poinçon 170 présente à cet effet deux protubérances 172 de forme correspondante.

Alternativement, comme cela est représenté à la figure 29c, on réalise une déformation 171 allongée axialement unique sur chacune des structures de segment 38 situées à la périphérie interne du stator. La déformation 171 est réalisée en sorte que des extrémités de cette déformation 171 sont espacées des extrémités axiales correspondantes des structures de segment 38 d'au moins trois millimètres. Le poinçon 170 présente à cet effet une protubérance 172 de forme correspondante.

Sur le produit final, les structures de segment 38 de la couche la plus proche de l'axe du stator 15, ou couche interne, comporte des traces de déformation réalisée par le poinçon 170.

Une fois le bobinage 17 installé sur le stator 15, on réalise une étape d'imprégnation consistant à faire couler du vernis liquide autour du bobinage 17 d'excitation, et plus particulièrement autour des deux chignons du bobinage 163. Le vernis qui est chauffé pourra être introduit à l'état liquide goutte à goutte dans les fils 44 du bobinage 17. Ensuite, le verni est refroidi en se polymérisant. Le vernis est par exemple à base de résine époxy.

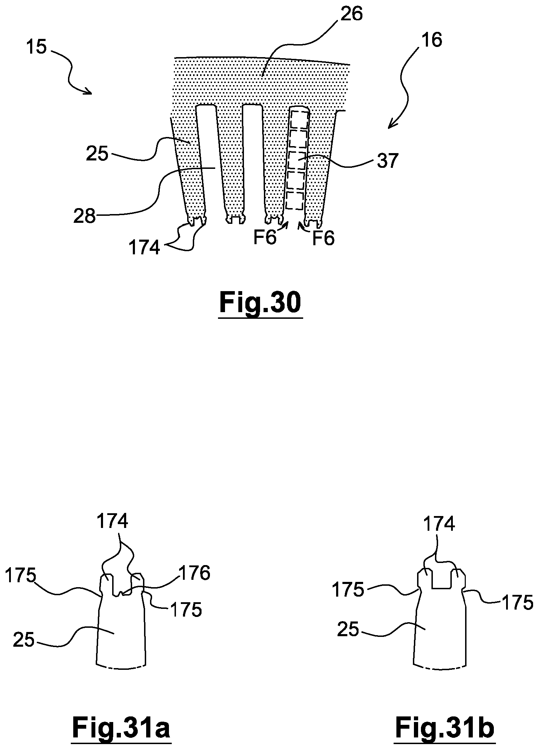

Dans une variante de réalisation du stator 15 montrée à la figure 30, chaque dent 25 comporte deux pieds de dents 174 pliables.

Avant d'être pliés, les pieds de dents 174 sont situés le long des bords des encoches 28 s'étendent suivant un plan sensiblement radial de manière à être dégagé des encoches 28.

Les pieds de dent 174 comportent chacun une réduction de section 175 au niveau de leur liaison avec chaque extrémité libre des dents 25. La réduction de section 175 est réalisée dans la face du pied de dent 174 tournée vers l'encoche. Les pieds de dent 174 présentent de préférence un côté d'extrémité arrondi. Dans le mode de réalisation de la figure 31a, la face interne de chaque dent 25 s'étendant entre les deux pieds de dent 174 comporte une protubérance 176. Dans le mode de réalisation de la figure 31b, la face interne de chaque dent 25 est dépourvue de protubérance 176.

Suite à l'étape d'insertion des structures de segment 83 dans les encoches 28 par expansion des lames 148, les pieds de dents 174 sont repliés vers l'intérieur de chaque encoche 28 suivant les flèches F6 de manière à fermer au moins partiellement les encoches 28.

Une telle configuration permet d'améliorer les performances magnétiques de la machine électrique tout en permettant une insertion aisée des structures de segment 38 à l'intérieur des encoches 28.

Dans le mode de réalisation de la figure 36, la nappe de bobinage 52 est obtenue à partir d'une imbrication entre une première 181 et d'une deuxième 182 sous-nappe. L'imbrication des deux sous-nappes est réalisée de telle sorte que d'une part la première 181 et la deuxième 182 sous-nappes ont des entrées I1-I6 et des sorties O1-O6 toutes situées d'un même côté du stator 15 et d'autre part que la deuxième sous-nappe 182 est décalée par rapport à la première nappe d'un nombre encoches dans le stator égal au nombre de phases, en l'occurrence six. Cela correspond au décalage axial D sur la figure. On facilite ainsi la réalisation des connexions compte tenu du positionnement avantageux des entrées I1-I6 et des sorties O1-O6 d'un même côté du stator 15. La première 181 et la deuxième 182 sous-nappes sont de préférence identiques. Les deux sous-nappes 181, 182 sont de préférence réalisées à partir d'un même ensemble de fils 44. Chaque enroulement de phase E1-E6 est réalisé à partir d'un fil unique 44 reliant l'entrée li à la sortie Oi pour i allant de 1 à 6 dans le cas d'un stator hexaphasé.

Les sous-nappes 181, 182 présentent chacune une longueur égale à N/2 fois la circonférence du stator 15, N étant le nombre de couches de conducteurs 37 souhaitées dans le stator 15 bobiné, N étant supérieur ou égal à deux. Le nombre N de couches de conducteurs 37 est égal par exemple à deux, quatre, six ou huit. De préférence, le nombre N de couches de conducteurs 37 est égal à huit.

Les différentes étapes de mise en place de la nappe 52, d'installation de la nappe 52 dans la broche 105, et de transfert du bobinage de broche 105 vers le stator 15 sont identiques à celles décrites précédemment.

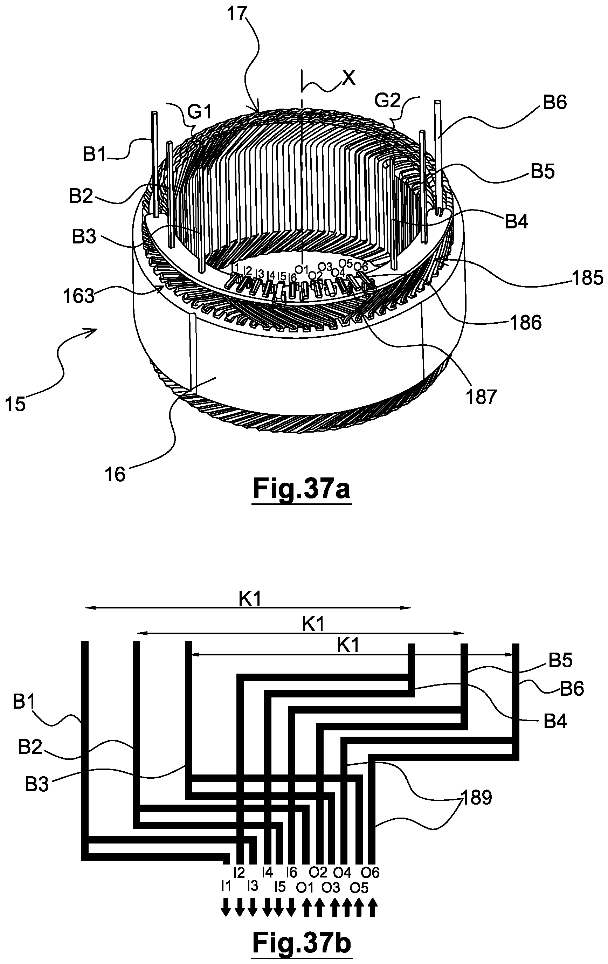

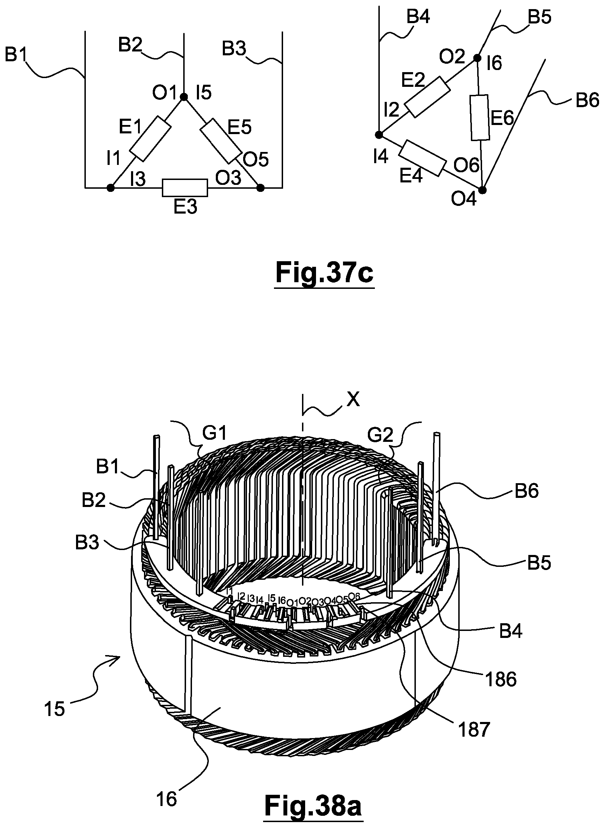

On décrit ci-après en référence avec les figures 37a à 37c et 38a à 38c les différents types de couplage des enroulements de phase E1-E6 réalisés à l'aide d'un interconnecteur 185 en forme de portion d'anneau. Cet interconnecteur 185 est disposé entre un chignon 163 du bobinage 17 et des diodes (non représentées) d'un pont redresseur de tension. Cet interconnecteur 185 comporte des bornes électroniques B1-B6 d'orientation axiale dont le nombre est égal au nombre d'enroulements de phase E1-E6, ici égal à six.

Les bornes B1-B6 sont reparties sur l'interconnecteur 185 suivant deux groupes G1 et G2 comportant chacun un même nombre de bornes B1-B3 et B4-B6. Ce nombre de bornes électroniques correspond au nombre de phases divisé par deux, soit trois bornes par groupe G1, G2.

L'écart angulaire K1 entre une borne d'un des groupes G1, G2 et la borne correspondante de l'autre groupe G1, G2 est constant. Ainsi, la borne d'extrémité B1 la plus à gauche d'un des groupes G1 est séparée de la borne d'extrémité B4 la plus à gauche de l'autre groupe G2 de l'écart angulaire K1.La borne centrale B2 du premier groupe G1 est séparée de la borne centrale B5 du groupe G2 de l'écart angulaire K1. La borne d'extrémité B3 la plus à droite d'un des groupes G1 est séparée de la borne d'extrémité B4 la plus à droite de l'autre groupe G2 de l'écart angulaire K1. L'écart angulaire K1 de l'ordre de 125 degrés.

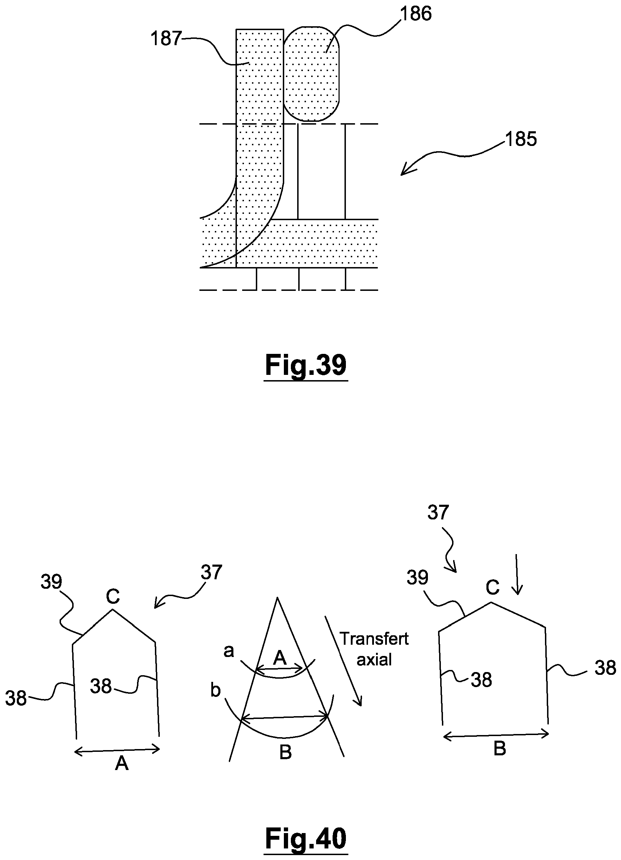

Dans les modes de réalisation des figures 37a et 38a, les extrémités 186 des enroulements de phase E1-E6 correspondant aux entrées et aux sorties sont rabattues de manière à être plaquées contre l'interconnecteur 185 suivant une direction radiale. Ces extrémités 186 sont ensuite soudées à des pattes 187 de l'interconnecteur 185 d'orientation axiale. Dans la variante représentée à la figure 39, les extrémités 186 s'étendent axialement et sont soudées sur des pattes 187 de l'interconnecteur 185 d'orientation radiale. Dans tous les cas, l'interconnecteur 185 comporte deux pattes 187 par phase.

L'interconnecteur 185 comporte des traces 189 reliant électriquement les pattes 187 aux bornes électroniques B1-B6.

On pourra réaliser un couplage triangle dit "double triphasé" illustré sur les figures 37b et 37c.

On couple ainsi en triangle d'une part le premier E1, le troisième E3 et le cinquième E5 enroulements de phase, et d'autre part le deuxième E2, le quatrième E4 et le sixième E6 enroulements de phase.

Plus précisément, les traces 189 de l'interconnecteur 185 assurent alors une connexion des entrées I1, I3 du premier et du troisième enroulements de phase E1 et E3 avec la borne B1. Des traces 189 assurent également une connexion d'une entrée I5 du cinquième enroulement de phase E5 et d'une sortie O1 du premier enroulement de phase E1 avec la deuxième borne B2. Des traces 189 assurent une connexion d'une sortie O5 du cinquième enroulement de phase E5 et d'une sortie O3 du troisième enroulement de phase E3 avec la troisième borne B3.

Par ailleurs, l'interconnecteur 185 comporte des traces 189 pour réaliser des connexions correspondantes pour les enroulements de phase E2, E4 et E6 conformément aux figures 37b et 37c. Ainsi, les traces 189 de l'interconnecteur 185 assurent alors une connexion des entrées I2, I4 du deuxième et du quatrième enroulements de phase E2 et E4 avec la borne B4. Des traces 189 assurent également une connexion d'une entrée I6 du sixième enroulement de phase E6 et d'une sortie O2 du deuxième enroulement de phase E2 avec la borne B5. Des traces 189 assurent une connexion d'une sortie O4 du quatrième enroulement de phase E4 et d'une sortie O6 du sixième enroulement de phase E6 avec la borne B6.

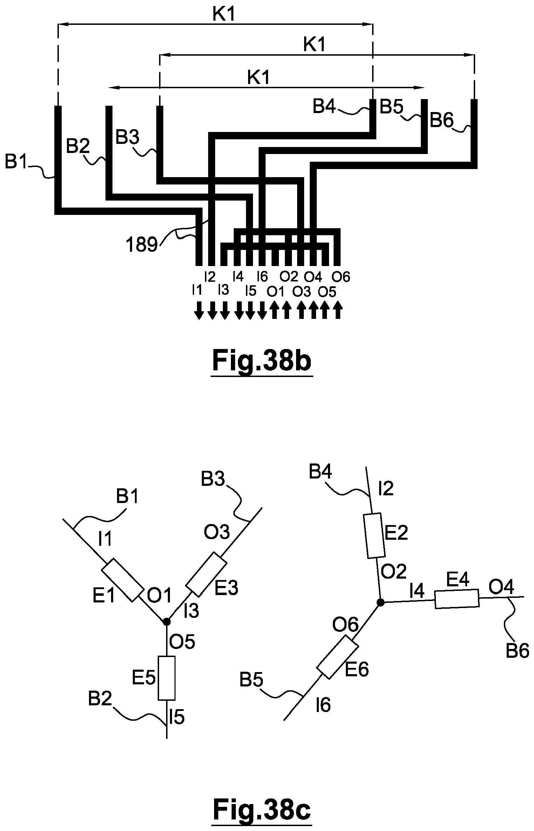

Alternativement, le couplage réalisé est un couplage étoile "double triphasé" illustré sur les figures 38b et 38c. On couple ainsi en étoile d'une part le premier E1, le troisième E3 et le cinquième E5 enroulements de phase, et d'autre part le deuxième E2, le quatrième E4 et le sixième E6 enroulements de phase.

Plus précisément, des traces 189 assurent une interconnexion en un point neutre situé sur l'interconnecteur 185 des sorties du premier E1 et du cinquième E5 enroulement de phase et de l'entrée du troisième E3 enroulement de phase. Une trace 189 assure une connexion de l'entrée I1 de l'enroulement de phase E1 avec la borne B1. Une trace 189 assure une connexion de l'entrée I5 de l'enroulement de phase E5 avec la borne B2.

Une trace 189 assure une connexion de la sortie O3 de l'enroulement de phase E3 avec la borne B3.

L'interconnecteur 185 comporte des traces 189 pour réaliser des connexions correspondantes pour les enroulements de phase E2, E4 et E6 conformément aux figures 38b et 38c. Ainsi des traces 189 assurent une interconnexion en un point neutre situé sur l'interconnecteur 185 des sorties du deuxième E2 et du sixième E6 enroulement de phase et de l'entrée du quatrième E4 enroulement de phase. Une trace 189 assure une connexion de l'entrée I2 de l'enroulement de phase E2 avec la borne B4. Une trace 189 assure une connexion de l'entrée I6 de l'enroulement de phase E6 avec la borne B5. Une trace 189 assure une connexion de la sortie O4 de l'enroulement de phase E4 avec la borne B6.

En variante, on pourra réaliser un couplage hybride dans lequel on couple les enroulements de phase d'un des groupes parmi le groupe E1-E3-E5 et le groupe E2-E4-E6 en étoile et les enroulements de phase de l'autre groupe en triangle.

De préférence, afin d'obtenir que les entrée sortie O1-O6 I1-I6 soient positionnées en périphérie externe du stator, on enroule en premier sur la broche est la partie irrégulière 47. On évite ainsi que les fils d'entrée - sortie n'interfèrent avec le ventilateur du rotor compte tenu de l'absence de pied de dent pour maintenir ces fils dans certains modes de réalisation.

On décrit ci-après en référence avec les figures 40 à 43, différentes mises en oeuvre du procédé permettant d'adapter la forme des chignons de bobinage 163.

Il est à noter que, sur le peigne de transfert 83 ainsi que sur la broche 105, chaque conducteur 37 est séparé du suivant par un entraxe correspondant à la distance entre le milieu de l'entrée d'encoche N et le milieu de l'entrée d'encoche N+1, ce pas étant invariant.

Contrairement à ce pas invariant pour un stator 15 donné, la hauteur des couches de conducteurs 37 est flexible, en sorte qu'il est possible de faire varier la hauteur des chignons 163 sur le stator 15 fini. Par ailleurs, la hauteur des chignons de bobinage 163 va varier en fonction de la position des couches sur le peigne 83.

Pour une portion donnée d'un conducteur 37 d'un enroulement de phase constituée de deux structures de segment 38 reliées par une structure de boucle 39, on définit une distance A correspondant à la longueur de l'arc de cercle entre le milieu des deux entrées d'encoche 109 de la broche annulaire 105 qui vont recevoir les deux conducteurs 37.

On définit par ailleurs une distance B (supérieure à A) correspondant à la longueur de l'arc de cercle entre le milieu des deux encoches 28 sur le diamètre de positionnement des conducteurs 37 après le transfert dans les encoches 28 du stator 15 qui vont recevoir les deux conducteurs 37.

La hauteur du point C va diminuer en s'éloignant de l'axe et monter en se rapprochant de l'axe compensant ainsi les variations de distance entre les structures de segment 38. Autrement dit, les structures de segment 38 sur un diamètre (a) vont, en étant transférer axialement vers les encoches 28 sur un diamètre (b) s'éloigner physiquement l'une de l'autre.

En adaptant la hauteur des couches du bobinage 17, on configure alors une hauteur de chignon avant transfert qui va générer après transfert une hauteur différente (résultante de la somme des hauteurs de couches de conducteurs résultantes du bobinage 17 et de la hauteur perdue suite au transfert des conducteurs 37).

Plus précisément, afin d'obtenir des chignons de bobinage 163 dont la hauteur augmente quand on se déplace de la périphérie externe du stator 15 vers l'axe X, les couches de conducteurs 37 mises en place sur la broche annulaire 105 présentent des hauteurs différentes: les couches les plus hautes sur la broche 105 se situent à la périphérie interne, et les couches plus basses se situent à la périphérie externe (la broche 105 étant l'image des encoches 28 du stator 15).

Après transfert, chaque couche perd de la hauteur proportionnellement en fonction de sa position sur la broche 105 et sa position finale dans le stator 15. Plus précisément, plus la couche se situe en couche externe, plus elle perd de la hauteur de chignon lors de son transfert de la broche vers le stator.

Ainsi, pour obtenir dans le stator 15, une couche externe de chignon plus basse que les autres, il suffit que dans la broche 105, les couches soient toutes à la même hauteur. Il est également possible pour accentuer la différence de hauteur entre la couche interne et la couche externe dans le chignon de prévoir dans la broche 105 une couche externe de hauteur moins importante que la couche interne.

Pour obtenir un tel agencement, il faut que l'extrémité de la nappe 52 qui s'enroule la première sur la broche 105 soit de hauteur plus importante que le reste de la nappe 52.

Pour cela, on utilise sur l'unité de bobinage 51 les clavettes 66 dont l'écartement varie pour faire varier la hauteur de la nappe 52.

Ainsi, dans le premier cas où l'extrémité de la nappe 52 qui s'enroule la première sur la broche 105 est la partie irrégulière 47, on diminue au fur et à mesure de la formation de la nappe l'écartement entre les deux clavettes 66.

Au contraire, dans le second cas où l'extrémité de la nappe 52 qui s'enroule la première sur la broche 102 est la partie de connexion, on augmente au fur et à mesure de la formation de la nappe 52 l'écartement entre les deux clavettes 66.

En effet, comme décrit précédemment, la formation de la nappe 52 est toujours réalisée à partir de la partie irrégulière 47.

Dans le premier cas, on obtient l'avantage technique que les entrée-sortie O1-O6 11-16 soient positionnées en périphérie externe du stator 15.

Au contraire, dans le deuxième cas, les entrée sortie O1-O6; I1-I6 sont positionnées en périphérie interne du stator 15.

L'avantage d'une telle configuration est une forme de chignon 163 qui épouse la forme du palier et permet d'optimiser l'encombrement de la machine, et notamment sa longueur. En outre, cela permet une meilleure exposition au flux d'air généré par le rotor.

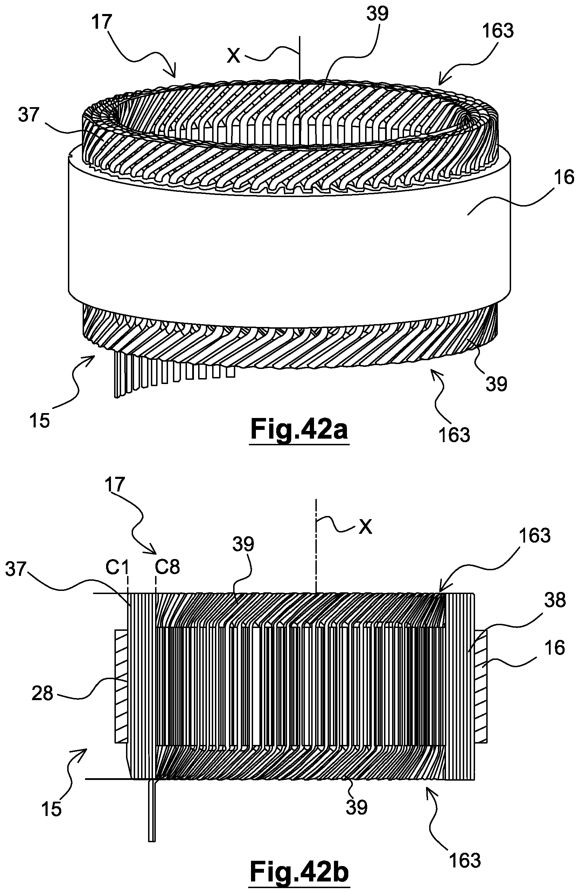

Afin d'obtenir des chignons de bobinage 163 plats comme cela est illustré aux figures 42a et 42b, les hauteurs des couches de conducteurs 37 mises en place sur la broche 105 sont différentes afin de compenser uniquement la perte de hauteur liée au phénomène de transfert des couches de conducteurs 37 depuis le diamètre (a) vers le diamètre (b).

Pour obtenir un tel agencement, il faut que l'extrémité de la nappe 52 qui s'enroule la première sur la broche 105 soit de hauteur plus faible que le reste de la nappe 52.

Ainsi, dans le premier cas où l'extrémité de la nappe qui s'enroule la première sur la broche 105 est la partie irrégulière 47, on augmente au fur et à mesure de la formation de la nappe 52 l'écartement entre les deux clavettes 66.

Au contraire, dans le second cas où l'extrémité de la nappe 52 qui s'enroule la première sur la broche 105 est la partie de connexion, on diminue au fur et à mesure de la formation de la nappe 52 l'écartement entre les deux clavettes 66.

Dans le premier cas, on obtient l'avantage technique que les entrée sortie O1-O6 I1-I6 soient positionnées en périphérie externe du stator.

Au contraire, dans le deuxième cas, les entrée sortie O1-O6 I1-I6 sont positionnées en périphérie interne du stator.

La résultante est l'obtention d'une hauteur de chignons de bobinage 163 homogène. Cela permet d'optimiser la longueur de la machine, et d'obtenir un meilleur contact entre les couches de conducteurs 37 afin d'optimiser le transfert de chaleur depuis la couche en vis-à-vis du rotor vers la couche en vis-à-vis du palier.

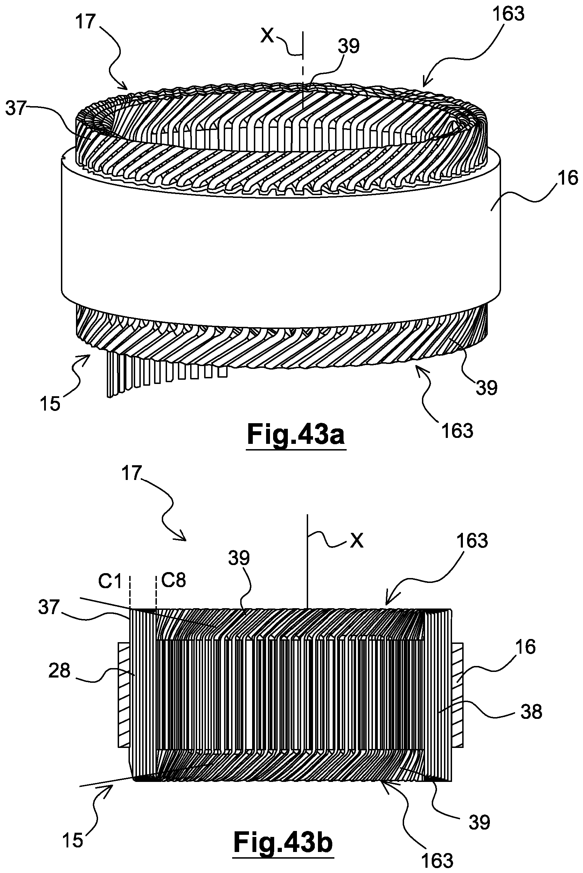

Afin d'obtenir des chignons de bobinage 163 dont la hauteur diminue lorsqu'on se déplace de la périphérie externe du stator 15 vers l'axe X comme cela est illustré aux figures 43a et 43b, les couches de conducteurs 37 mises en place sur la broche annulaire 105 présentent des hauteurs différentes: les couches de conducteurs 37 les plus hautes sur la broche 105 se situent à la périphérie externe, et les couches de conducteurs 37 les plus basses se situent à la périphérie interne.

Pour obtenir un tel agencement, il faut que l'extrémité de la nappe 52 qui s'enroule la première sur la broche 105 soit de hauteur plus faible que le reste de la nappe 52.

Ainsi, dans le premier cas où l'extrémité de la nappe qui s'enroule la première sur la broche est la partie irrégulière 47, on augmente au fur et à mesure de la formation de la nappe 52 l'écartement entre les deux clavettes 66.

Au contraire, dans le second cas où l'extrémité de la nappe 52 qui s'enroule la première sur la broche est la partie de connexion, on diminue au fur et à mesure de la formation de la nappe l'écartement entre les deux clavettes 66.

Dans le premier cas, on obtient l'avantage technique que les entrée sortie O1-O6 I1-I6 soient positionnées en périphérie externe du stator.

Au contraire, dans le deuxième cas, les entrée sortie O1-O6 I1-I6 sont positionnées en périphérie interne du stator.

L'avantage d'une telle configuration est l'optimisation du flux d'air dans la machine qui favorise les échanges entre diamètre intérieur et diamètre extérieur de la machine.

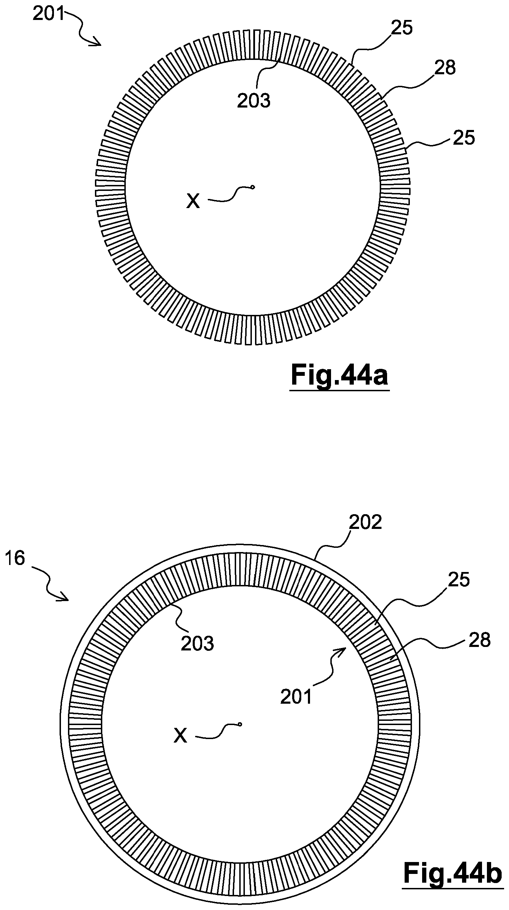

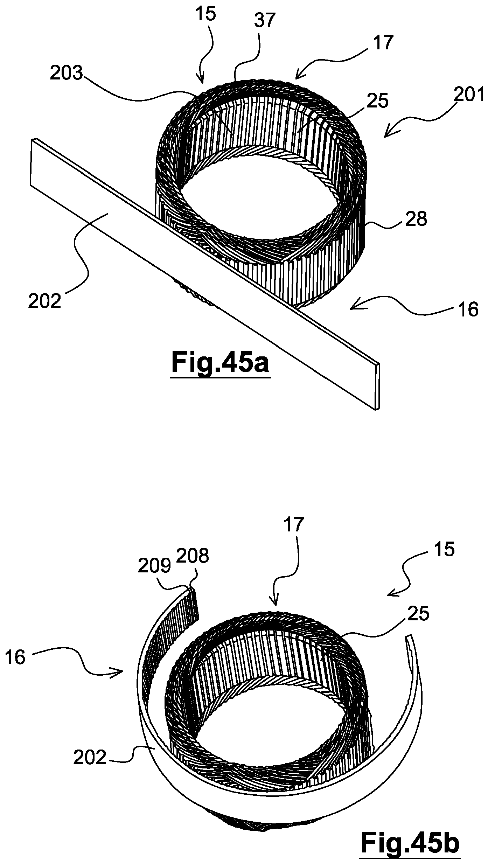

Dans le mode de réalisation des figures 44a, 44b, 45a, 45b, le corps 16 du stator 15 est formé par deux éléments assemblés entre eux, à savoir un noyau central 201 destiné à recevoir les conducteurs 37 ainsi qu'une culasse rapportée 202 destinée à être positionnée autour du noyau central 201. Le noyau central 201 ainsi que la culasse 202 sont des empilages de tôles. Le noyau central 201 comporte des encoches 28 ouvertes du côté de sa périphérie externe et reliées entre elles du côté d'une périphérie interne par des pieds de dent 203 qui s'étendent chacun de part et d'autre d'une extrémité libre d'une dent 25. Ces pieds de dents 203 définissent ainsi des zones de raccord 204 entre les extrémités libres des dents 25.

Une telle configuration permet de faciliter l'insertion du bobinage 17 par l'extrémité extérieure ouverte des encoches 28, tout en pouvant bénéficier des pieds de dents 25 qui améliorent les performances magnétiques de la machine.

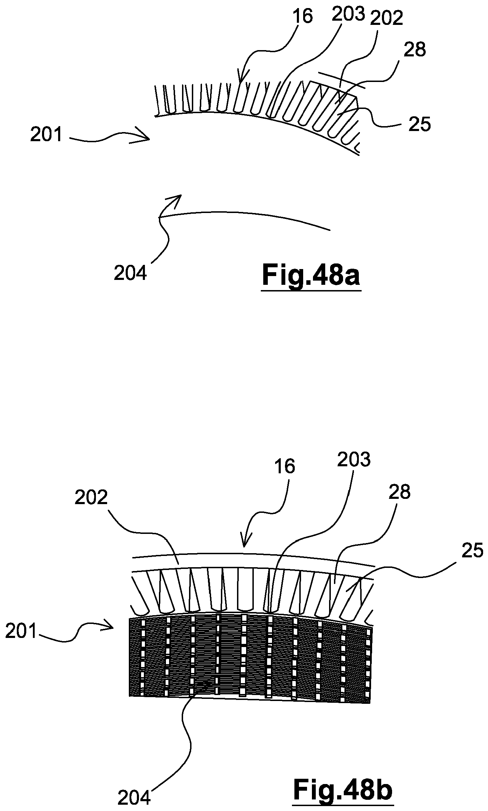

Comme cela est montré à la figure 48a, le noyau central 201 pourra être plein dans les zones de raccord 204 entre deux dents 25 successives. Alternativement, comme cela est montré sur la figure 48b, le noyau central 201 est ajouré dans les zones de raccord 204 entre deux dents 25 successives.

Par ailleurs, l'empilage de tôles de la culasse 202 pourra s'étendre sur toute la hauteur du noyau central 201 ou sur la moitié de la hauteur du noyau central 201. L'empilement de tôle de la culasse 202 pourra être plat avant sa déformation par cambrage vers une forme cylindrique pour sa mise en place autour du noyau central 201 (cf. figure 45a). Alternativement, la culasse 26 pourra présenter initialement une forme en arc afin de faciliter son positionnement autour du noyau central 201 (cf. figure 45b).

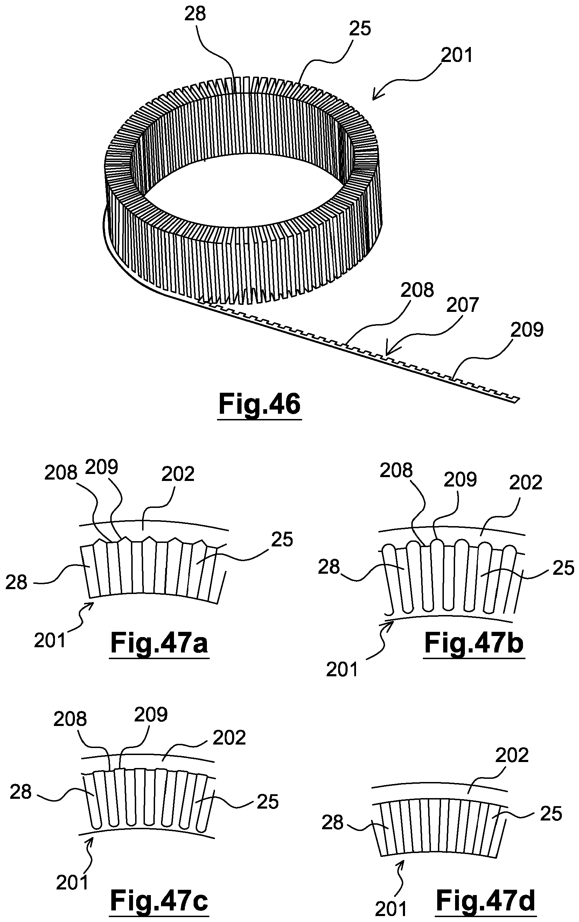

Dans un autre mode de réalisation montré à la figure 46, on utilise une tôle à plat 207 ayant une hauteur inférieure à celle du noyau central 201 de manière à créer un enroulement de cette tôle 207 autour du noyau central 201. L'opération d'enroulement de la tôle 207 est répétée autant de fois que nécessaire pour atteindre la hauteur du noyau central 201. Cette opération peut être réalisée avec plusieurs tôles 207 empilées axialement enroulées sur plusieurs tours.

Le noyau central 201 pourra être fixé sur la culasse rapportée 202 par un emboîtement de forme triangulaire (cf. figure 47a), un emboîtement de forme ronde (cf. figure 47b), ou un emboîtement sous forme d'un rayon (cf. figure 47c). La culasse 202 ou la tôle 207 présente alors une succession de zones planes 208 et de creux 209 de forme correspondante (triangulaire, ronde ou sous forme d'un rayon), comme on peut le voir aux figures 45b, 46, 47a à 47c. Les creux 209 sont destinés à coopérer avec les extrémités externes des dents 25 de forme complémentaire. Les zones planes 208 sont destinées à s'étendre entre deux dents 25 successives pour former le fond des encoches 28. Alternativement, la culasse 202 est mise en place autour du noyau central 201 sans emboîtement, comme montré sur la figure 47d.

Une telle configuration du corps 16 permet d'éviter d'avoir à réaliser des étapes de transfert du bobinage 17 de la broche 105 vers le stator 15. En effet, dans ce cas, il est possible de remplacer la broche 105 par le noyau central 201 de manière à transférer directement les structures de segment 38 du peigne 83 vers les encoches 28 du noyau central 201.

A cet effet, on met en place un moyeu 112 dans la partie centrale du noyau 201. Le moyeu 112 est fixé de manière amovible sur les pieds de dent 203. La mise en place du moyeu 112 permet de faire tourner le noyau central 201 lors de l'insertion des structures de segment 38 depuis le peigne 83 vers les encoches 28. Une fois le bobinage 17 installé à l'intérieur des encoches 28 du noyau central 201, la face ouverte extérieure des encoches 28 est fermée au moyen de la culasse 26 suivant une des techniques précédemment décrite. Le moyeu 112 peut alors être retiré.

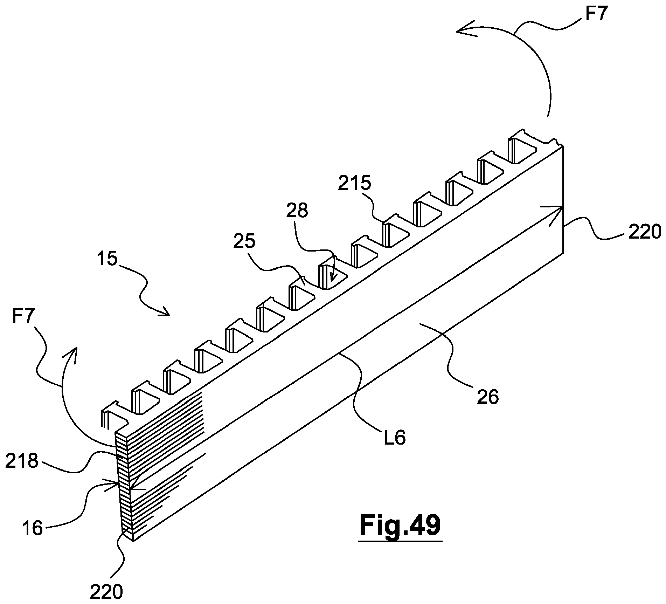

Dans un mode de réalisation décrit à la figure 49, on réalise un stator 15 plat comportant un corps plat 16 formé par un paquet de feuilles de tôles empilées. Le corps plat 16 est muni d'une culasse 26 plate s'étendant sensiblement dans un plan et dents 25 s'étendant sensiblement perpendiculairement à la culasse 26. Ces dents 25 délimitent deux à deux des encoches 28 munies de préférence de pieds de dent 215. La longueur L6 du stator 15 plat correspond à la circonférence du stator 15 une fois l'étape de cambrage réalisée suivant les flèches F7.

Afin d'obtenir le stator 15 plat, on réalise une étape préalable de thermocollage des feuilles de tôles 218 entre elles. Toutes les feuilles de tôles 218 pourront être thermocollées entre elles. Alternativement, une feuille sur N est thermocollée, N étant supérieur ou égal à deux. Les feuilles 218 qui ne sont pas thermocollées sont assemblées entre elles et avec les feuilles thermocollées entre elles par rivetage au moyen d'un rivet (non représenté) traversant le paquet de tôles de part en part ou alternativement par soudage.

La nappe de bobinage 52 précédemment décrite pourra être insérée dans les encoches 28 du stator plat 15. Etant donné que la nappe de bobinage 52 présente une longueur égale à un nombre entier M de fois la circonférence (à la partie irrégulière près, 6 encoches dans le cas hexaphasé) du stator 15, on met en place la nappe de bobinage 52 suivant M fois la longueur du stator 15 suivant un chemin en aller-retour le long du stator plat.

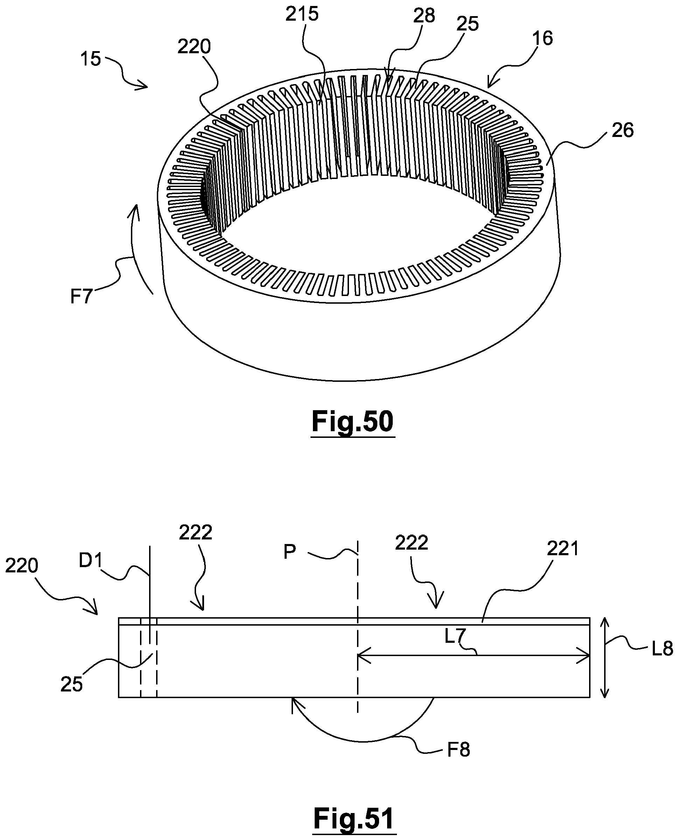

Une fois la nappe de bobinage 52 mise en place, une étape de cambrage du stator 15 plat est réalisée de manière à former un stator 15 bobiné de forme globalement cylindrique montré à la figure 50 sans le bobinage 17 pour améliorer la netteté de la figure. Les bords d'extrémité 220 du stator cambré et bobiné sont alors soudés entre eux.

Le thermocollage des feuilles de tôles 218 permet ainsi de limiter la déformation des feuilles de tôles 218, en particulier l'évasage des dents 25, lors de l'étape de cambrage du stator 15.

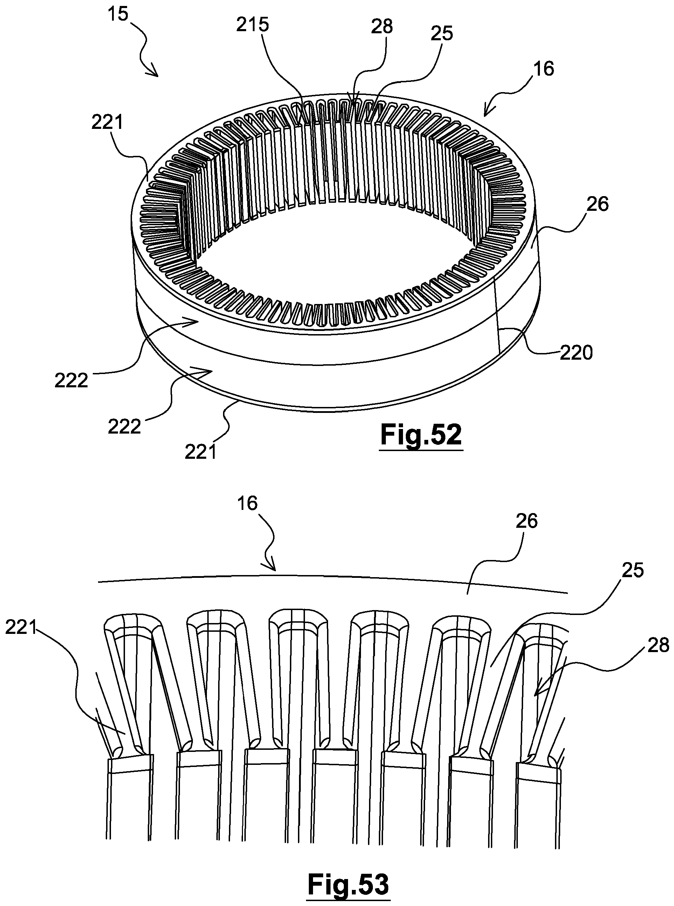

Dans le mode de réalisation des figures 51 et 52, une tôle de rive 221 est plaquée contre une face d'extrémité d'une ligne 220 de demi-paquets 222 de feuilles de tôles. La tôle de rive 221 est plus épaisse que les feuilles 218 du paquet de tôles. La tôle de rive 221 présente une épaisseur égale à au moins un millimètre. La face d'extrémité contre laquelle est fixée la tôle de rive 221 est perpendiculaire à une direction d'allongement longitudinal D2 des dents 25 (une seule dent 25 a été représentée sur la figure 51 pour faciliter la compréhension).

La ligne 220 de demi-paquets 222 est ensuite découpée par exemple au laser suivant le plan P pour obtenir deux demi-paquets 222 séparés. Chaque demi-paquet 222 présente une longueur L7 sensiblement égale à la circonférence du stator 15 et une largeur L8 sensiblement égale à la moitié de la hauteur du stator 15 final. Les deux demi-paquets 222 sont ensuite assemblés entre eux suivant la flèche F8, c'est-à-dire en retournant un des paquets 222 découpés de manière à plaquer l'une contre l'autre les faces des deux demi-paquets 222 opposées à la face portant la tôle de rive 221.

On obtient alors un stator plat 15 comportant une tôle de rive 221 plaquée contre chacune de ses extrémités correspondant aux extrémités axiales du stator cylindrique. La nappe de bobinage 52 est ensuite mise en place dans des encoches 28 du stator plat 15 comme cela a été décrit précédemment.

Le stator plat 15 est ensuite cambré pour obtenir un stator bobiné de forme globalement cylindrique représenté en figure 52 et 53 sans son bobinage 17. Les bords d'extrémité 220 du stator 15 cambré sont alors soudés entre eux.

En variante, on réalise deux demi-paquets 222 chacun en forme de demi-anneaux comportant deux tôles de rive 221 plaquées de part et d'autre sur les faces d'extrémité axiale. Ces demi-paquets 222 sont assemblés entre eux suivant leurs extrémités après avoir mis en place la nappe de bobinage 52 à l'intérieur des encoches 28 des deux demi-paquets 222. En variante, deux tôles de rive 221 sont plaquées de part et d'autre du stator plat 15 de la figure 49 avant l'étape de cambrage.

Les demi-paquets 222 constituent ainsi des sous-paquets assemblés entre eux pour obtenir le corps du stator 15. En variante, le paquet de tôles du stator 15 est obtenu par assemblage de plus de deux sous-paquets. Dans ce cas, les deux paquets extrêmes comportent chacun une tôle de rive 221.

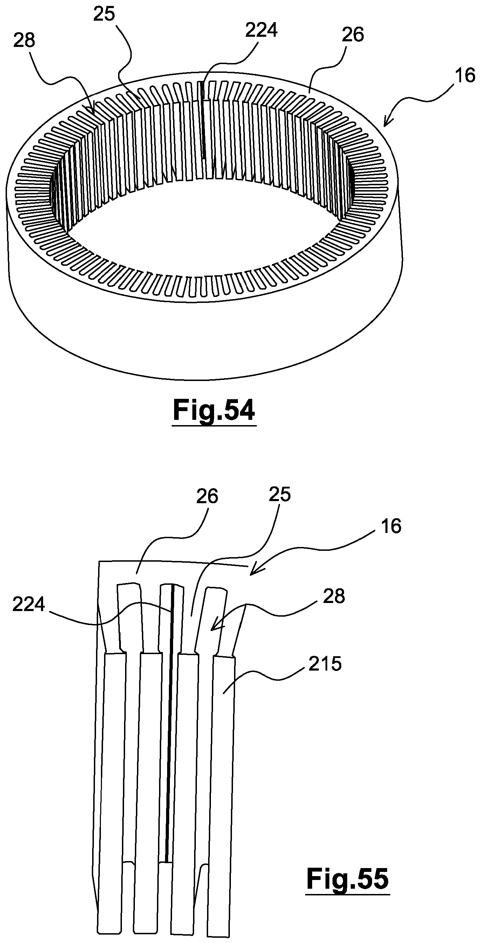

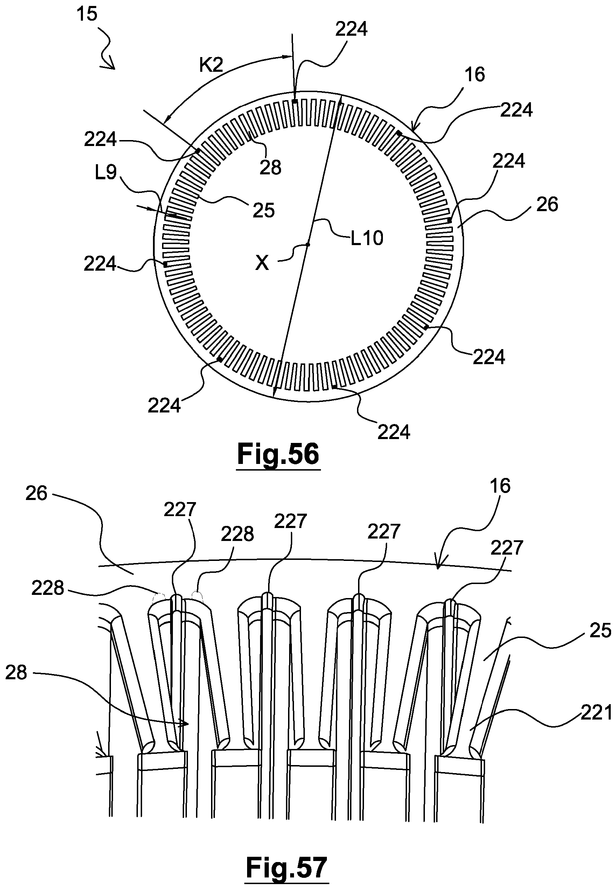

Par ailleurs, afin d'améliorer la tenue mécanique du stator 15 lors de l'opération de cambrage du stator 15, le stator 15 comporte au moins une soudure 224 réalisée à l'intérieur d'au moins une encoche 28, comme cela est représenté aux figures 54 et 55. On entend par "soudure réalisée à l'intérieur de l'encoche", une soudure 224 réalisée sur une paroi interne d'une encoche 28, de préférence le fond d'une encoche 28. Des soudures 224 sont réalisées à l'intérieur de moins d'un quart des encoches 28. Deux soudures successives 224 sont espacées entre elles d'un angle K2 moins 30 degrés, comme représenté à la figure 56. Pour un stator 15 comportant 96 encoches, des soudures sont réalisées de préférence à l'intérieur d'une encoche sur 12 ou d'une encoche sur 6.

Dans le mode de réalisation de la figure 57, une creusure 227 pourra être réalisée dans un fond de chaque encoche 28. La creusure 227 est réalisée sensiblement au milieu du fond de l'encoche 28. Un rapport entre une profondeur de la creusure 227 et l'épaisseur de la culasse 26 est inférieur à 25%. En variante, deux creusures 228 représentées en traits discontinus sur la figure 57 sont réalisées dans le fond de chaque encoche 28 (à la place d'une seule encoche 227). Les creusures 228 sont sensiblement symétriques par rapport à un plan radial médian radial de chaque encoche 28. Ces creusures 228 sont réalisées alors chacune au niveau d'une base des dents 25 délimitant l'encoche 28.

Par ailleurs, un ratio entre une épaisseur L9 de la culasse 26 et un diamètre externe L10 du stator 15 (cf. figure 56) est compris entre 2.5% et 15%, afin de faciliter le cambrage de la culasse 26 du stator plat 15 vers la forme cylindrique. Il est à noter que le diamètre externe L10 du stator 15 correspond au diamètre externe de la culasse 26.

Les étapes de thermocollage, de mise en place de tôles de rive 221, de réalisation de soudures 224 ou de creusures 227, 228 dans le fond des encoches 28, pourront être réalisées indépendamment ou en combinaison. Il en est de même des ratios particuliers de dimensions du stator choisis. La configuration des dents 25 (à coins arrondis 31) ainsi que les dimensions des encoches 28 pourront être identiques à celles décrites précédemment avec le stator 15 de type classique à bobiner ayant initialement une forme cylindrique. L'isolant d'encoche continu 145 pourra également être mis en place dans les encoches du stator 15 avant insertion du bobinage.

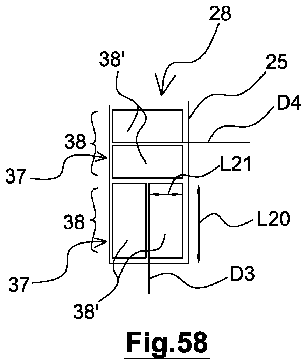

Dans la variante de réalisation du bobinage 17 montrée sur la figure 58, les deux conducteurs 37 comportent des structures de segment 38 qui alternent comme précédemment une couche interne et une couche externe lorsqu'on passe d'une encoche 28 à une encoche adjacente de la série suivant une circonférence du stator. En outre, lorsqu'elle occupe la couche interne la structure de segment 37 a une orientation D3 différente de celle D4 lorsqu'elle occupe la couche externe. Les deux orientations D3, D4 sont de préférence perpendiculaires l'une par rapport à l'autre.

Dans les encoches 28, une section transversale de chaque structure de segment 38 est composée de deux rectangles 38' empilés radialement lorsque la structure de segment 38 occupe une des couches parmi un ensemble comprenant la couche interne et la couche externe. Ces deux rectangles 38' sont empilés orthoradialement lorsque la structure de segment 38 occupe l'autre couche de l'ensemble. En l'occurrence, les rectangles 38' sont empilés radialement en couche interne et empilés orthoradialement en couche externe.

Une longueur L20 de chaque rectangle 38' est égale à deux fois une largeur L21 de chaque rectangle 38'.

Chaque enroulement de phase E1-E6 est alors constitué de deux fils. Autrement dit, la nappe de bobinage 52 est réalisée à l'aide de deux fils en main par enroulement de phase E1-E6 en réalisant une rotation de 90 degrés lorsqu'on passe d'une encoche 28 à l'encoche suivante de la série.

Mis à part l'utilisation des deux fils en main, le bobinage 17 obtenu est identique à celui décrit précédemment, c'est-à-dire qu'il comporte notamment une partie régulière 46 et une partie irrégulière 47. En outre, les structures de boucle 39 présentent la même configuration que celle décrite précédemment.

Les dents 25 sont ici de préférence dépourvues de pied de dent.

Bien entendu, la description qui précède a été donnée à titre d'exemple uniquement et ne limite pas le domaine de l'invention dont on ne sortirait pas en remplaçant les détails d'exécution par tous autres équivalents.

## Revendications

1. Stator (15) de machine électrique tournante comportant un corps (16) muni d'une culasse (26) et de dents (25) délimitant deux à deux des encoches (28) ainsi qu'un bobinage (17) comportant des conducteurs (37) ayant des structures de segment (38) insérées à l'intérieur des encoches (28), et un rapport entre une largeur d'encoche (L1) recouverte d'un isolant d'encoche (145) et une largeur de structure de segment (38) recouverte d'émail (L2) est compris entre 0,9 et 2, les encoches (28) sont trapézoïdales et sont pourvues de bords dont les directions convergent vers l'axe (X) du stator et **caractérisé en ce que** pour chaque encoche est défini :
- un jeu d'entrée d'encoche égal au jeu d'insertion (J) ;
- un jeu de fond d'encoche, le double du jeu de fond d'encoche étant inférieur à +0.5mm.

2. Stator selon la revendication 1, **caractérisé en ce que** chaque bord d'encoche (28) recouvert d'un isolant présentant un jeu d'insertion (J) avec une extrémité d'une section d'une structure de segment (38) donnée, la largeur d'encoche (L1) est égale à la somme de la largeur de structure de segment (L2) et du double du jeu d'insertion (J), ledit double du jeu d'insertion (J) étant inférieur à 0.3mm.

3. Stator selon la revendication 1 ou 2, **caractérisé en ce qu'**il est dépourvu de pied de dents.

4. Stator selon la revendication 3, **caractérisé en ce qu'**il comporte des coins (31) situés au niveau d'extrémités libres des dents (25) ayant une forme arrondie suivant un rayon, dit rayon d'entrée (R).

5. Stator selon la revendication 4, **caractérisé en ce que** le rayon d'entrée (R) est compris entre 0.15mm et la moitié d'une largeur d'une dent.

6. Stator selon l'une quelconque des revendications 1 à 5, **caractérisé en ce que** le bobinage (17) comporte une pluralité d'enroulements de phase (E1-E6).

7. Stator selon la revendication 6, **caractérisé en ce que** des structures de segment (38) de deux conducteurs (37) d'un même enroulement de phase sont positionnées alternativement dans une couche radiale interne et une couche externe suivant une circonférence du stator (15).

8. Stator selon la revendication 6 ou 7, **caractérisé en ce que** chaque enroulement de phase (E1-E6) est constitué d'un fil unique (44).

9. Stator selon l'une quelconque des revendications 1 à 8, **caractérisé en ce que** les conducteurs (37) ont une section carrée ou rectangulaire.

10. Stator selon l'une quelconque des revendications 1 à 9, **caractérisé en ce que** les structures de segment (38) des enroulements de phase (E1-E6) insérées dans les encoches (28) du stator (15) sont matricées.

11. Stator selon l'une quelconque des revendications 1 à 10, **caractérisé en ce que** ledit bobinage (17) comporte quatre, six, ou huit, couches de conducteurs (37) radialement superposées dans les encoches (28) du stator (15).

12. Machine électrique tournante comprenant un stator selon l'une des revendications précédentes.

## Patentansprüche

1. Stator (15) einer elektrischen Drehmaschine, der Folgendes umfasst: einen Körper (16), der über ein Joch (26) und über Zähne (25), die zu zweit jeweils Nuten (28) begrenzen, verfügt, sowie eine Umwicklung (17), die Leiter (37) mit Segmentstrukturen (38), die in das Innere des Nuten (28) eingeführt sind, umfasst, und wobei ein Verhältnis zwischen einer Breite (L1) einer Nut, die von einem Nutisolator (145) bedeckt ist, und einer Breite einer Segmentstruktur (38), die von Email (L2) bedeckt ist, zwischen 0,9 und 2 liegt, wobei die Nuten (28) trapezförmig sind und Ränder aufweisen, deren Richtungen zu der Achse (X) des Stators hin konvergieren, und **dadurch gekennzeichnet, dass** für jede Nut Folgendes definiert ist:
- ein Nuteintrittsspiel, das gleich dem Einführungsspiel (J) ist;
- ein Nutbodenspiel, wobei das Zweifache des Nutbodenspiels kleiner als +0,5 mm ist.

2. Stator nach Anspruch 1, **dadurch gekennzeichnet, dass**, während jeder mit einem Isolator bedeckte Rand einer Nut (28) ein Einführungsspiel (J) bezogen auf ein Ende eines Abschnitts einer gegebenen Segmentstruktur (38) aufweist, die Nutbreite (L1) gleich der Summe aus der Breite der Segmentstruktur (L2) und dem Zweifachen des Einführungsspiels (J) ist, wobei das Zweifache des Einführungsspiels (J) kleiner als 0,3 mm ist.

3. Stator nach Anspruch 1 oder 2, **dadurch gekennzeichnet, dass** er keine Zahnfüße aufweist.

4. Stator nach Anspruch 3, **dadurch gekennzeichnet, dass** er Ecken (31) umfasst, die sich an freien Enden der Zähne (25) befinden und eine abgerundete Form gemäß einem Radius, der als Eintrittsradius (R) bezeichnet wird, aufweisen.

5. Stator nach Anspruch 4, **dadurch gekennzeichnet, dass** der Eintrittsradius (R) zwischen 0,15 mm und der Hälfte einer Breite eines Zahns liegt.

6. Stator nach einem der Ansprüche 1 bis 5, **dadurch gekennzeichnet, dass** die Umwicklung (17) eine Vielzahl von Phasenwicklungen (E1-E6) umfasst.

7. Stator nach Anspruch 6, **dadurch gekennzeichnet, dass** Segmentstrukturen (38) von zwei Leitern (37) einer gleichen Phasenwicklung entlang eines Umfangs des Stators (15) abwechselnd in einer inneren radialen Schicht und einer äußeren Schicht positioniert sind.

8. Stator nach Anspruch 6 oder 7, **dadurch gekennzeichnet, dass** jede Phasenwicklung (E1-E6) aus einem einzigen Draht (44) besteht.

9. Stator nach einem der Ansprüche 1 bis 8, **dadurch gekennzeichnet, dass** die Leiter (37) einen quadratischen oder rechteckigen Querschnitt aufweisen.

10. Stator nach einem der Ansprüche 1 bis 9, **dadurch gekennzeichnet, dass** die in die Nuten (28) des Stators (15) eingeführten Segmentstrukturen (38) der Phasenwicklungen (E1-E6) gestanzt sind.

11. Stator nach einem der Ansprüche 1 bis 10, **dadurch gekennzeichnet, dass** die Umwicklung (17) vier, sechs oder acht Leiterschichten (37) umfasst, die in den Nuten (28) des Stators (15) radial übereinander liegen.

12. Elektrische Drehmaschine, die einen Stator nach einem der vorhergehenden Ansprüche beinhaltet.

## Claims

1. Stator (15) for a rotating electric machine, comprising a body (16) equipped with a yoke (26) and with teeth (25) defining, in pairs, slots (28), and a winding (17) comprising conductors (37) having segment structures (38) that are inserted inside the slots (28), and a ratio between a slot width (L1) covered with a slot insulator (145) and a segment structure (38) width (L2) covered with enamel is between 0.9 and 2, the slots (28) are trapezoidal and are provided with edges whose directions converge on the shaft (X) of the stator, and **characterized in that** the following is defined for each slot:
- a slot entry clearance equal to the insertion clearance (J);
- a slot base clearance, twice the slot base clearance being less than +0.5 mm.

2. Stator according to Claim 1, **characterized in that**, with each slot (28) edge covered with an insulator having an insertion clearance (J) with an end of a section of a given segment structure (38), the slot width (L1) is equal to the sum of the segment structure width (L2) and twice the insertion clearance (J), said twice the insertion clearance (J) being less than 0.3 mm.

3. Stator according to Claim 1 or 2, **characterized in that** it does not have any tooth bases.

4. Stator according to Claim 3, **characterized in that** it comprises corners (31) located at the free ends of the teeth (25) having a rounded shape along a radius, called entry radius (R).

5. Stator according to Claim 4, **characterized in that** the entry radius (R) is between 0.15 mm and half a width of a tooth.

6. Stator according to any one of Claims 1 to 5, **characterized in that** the winding (17) comprises a plurality of phase windings (E1-E6) .

7. Stator according to Claim 6, **characterized in that** segment structures (38) of two conductors (37) of one and the same phase winding are positioned alternately in an inner radial layer and an outer layer along a circumference of the stator (15).

8. Stator according to Claim 6 or 7, **characterized in that** each phase winding (E1-E6) consists of a single wire (44) .

9. Stator according to any one of Claims 1 to 8, **characterized in that** the conductors (37) have a square or rectangular cross section.

10. Stator according to any one of Claims 1 to 9, **characterized in that** the segment structures (38) of the phase windings (E1-E6) inserted into the slots (28) of the stator (15) are die-stamped.

11. Stator according to any one of Claims 1 to 10, **characterized in that** said winding (17) comprises four, six or eight layers of conductors (37) that are stacked radially in the slots (28) of the stator (15).

12. Rotating electric machine comprising a stator according to one of the preceding claims.
